# EUROPEAN PATENT SPECIFICATION

(11) **EP 2 631 057 B1**
(45) Date of publication and mention of the grant of the patent: **14.06.2017**
(21) Application number: 13155737.3
(22) Date of filing: 19.02.2013
(51) Int. Cl.: B29C 45/17, B29C 45/66

(54) **Injection molding machine**
Spritzgießmaschine
Machine de moulage à injection

(30) Priority: 21.02.2012 JP 2012035657
(43) Date of publication of application: 28.08.2013
(73) Proprietor: SUMITOMO HEAVY INDUSTRIES, LTD., Tokyo 141-6025 (JP)
(72) Inventor: Miyatake, Tsutomu, Kanagawa, 237-8555 (JP)
(74) Representative: Hoffmann Eitle

(56) References cited:
- EP-A1- 0 822 050
- DE-A1- 4 230 348
- JP-A- H07 100 855
- JP-A- 2008 012 813

## Description

### BACKGROUND OF THE INVENTION

### 1. Field of the Invention

The present invention relates to an injection molding machine.

### 2. Description of the Related Art

By attaching a mold device to an injection molding machine, a molded object is manufactured by the injection molding machine by filling a cavity space of the mold device with melted resin and solidifying it. The mold device includes a fixed die and a movable die and a reaction force of a mold clamping force of the fixed die and the movable die is received by a tie-bar which is provided around the mold device.

On the other hand, a tie-bar-less injection molding machine has been developed in order to simplify exchanging of a mold device, extracting of a molded object from the mold device or the like (see Patent Document 1, for example). In such an injection molding machine, a driving unit (a cylinder) that drives a mold clamping operation, a fixed die and a movable die are aligned in a line between both end portions of a C-frame so that a reaction force of a mold clamping force is received by the C-frame.

Conventionally, as the driving unit, the fixed die and the movable die are aligned in a line extending in a mold opening and closing direction, there is a problem that a longitudinal length of the injection molding machine becomes long and the size of the injection molding machine becomes large and heavy.

### [Patent Document]

[Patent Document 1] Japanese Laid-open Patent Publication No. H06-234143

A further document is EP 0 822 050 A1 referring to an injection molding machine with a fixed machine frame, which support a molding die, and with a movable carrier for a second die, the latter having at least one protrusion, which is inserted into the fixed die upon closing the mold. EP 0 822 050 A1 discloses the preamble of claim 1.

### SUMMARY OF THE INVENTION

The present invention is made in light of the above problems, and provides an injection molding machine of small size and lightweight.

According to an embodiment, there is provided an injection molding machine according to claim 1. Further embodiments are outlined in the dependent claims.

### BRIEF DESCRIPTION OF THE DRAWINGS

Other objects, features and advantages of the present invention will become more apparent from the following detailed description when read in conjunction with the accompanying drawings.
Fig. 1 is a view showing an example of an injection molding machine of a first embodiment at a mold clamping status and is a cross-sectional view taken along a I-I line in Fig. 2;
Fig. 2 is a front view showing an example of the injection molding machine of the first embodiment;
Fig. 3 is a view showing an example of the injection molding machine of the first embodiment at a mold opening status;
Fig. 4 is a view for explaining rotation moments generated by a mold clamping operation of the injection molding machine of the first embodiment;
Fig. 5 is a view for explaining rotation moments generated by a mold opening operation of the injection molding machine of the first embodiment;
Fig. 6 is a view for explaining an operation of an adjusting unit of the injection molding machine of the first embodiment;
Fig. 7 is a view showing an example of an injection molding machine of a second embodiment at the mold clamping status;
Fig. 8 is a front view showing an example of a fixed-side support member of the second embodiment;
Fig. 9 is a view showing an example of the injection molding machine of the second embodiment at the mold opening status;
Fig. 10 is a view for explaining rotation moments generated by a mold clamping operation of the injection molding machine of the second embodiment;
Fig. 11 is a view for explaining rotation moments generated by a mold opening operation of the injection molding machine of the second embodiment;
Fig. 12 is a view for explaining an operation of an adjusting unit of the injection molding machine of the second embodiment;
Fig. 13 is a view showing an example of an injection molding machine of a third embodiment at the mold clamping status, and is a cross-sectional view taken along a XIII-XIII line in Fig. 15;
Fig. 14 is a back view of an example of the injection molding machine of the third embodiment;
Fig. 15 is a front view of an example of the injection molding machine of the third embodiment;
Fig. 16 is view showing an example of the injection molding machine of the third embodiment at the mold opening status;
Fig. 17 is a view for explaining rotation moments generated by a mold clamping operation of an injection molding machine of the third embodiment;
Fig. 18 is a view for explaining rotation moments generated by a mold opening operation of the injection molding machine of the third embodiment; and
Fig. 19 is a view for explaining an operation of an adjusting unit of the injection molding machine of the third embodiment.

### DETAILED DESCRIPTION OF THE PREFERRED EMBODIMENTS

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

Further, it is assumed that a moving direction of a movable-side support member in a mold closing operation is a forward, and a moving direction of the movable-side support member in a mold opening operation is a backward.

### (First embodiment)

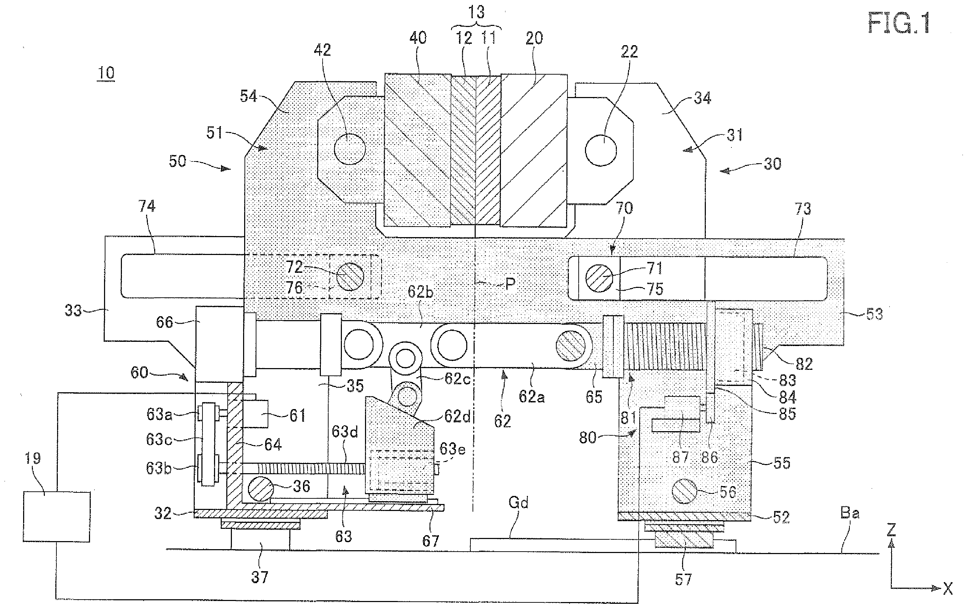

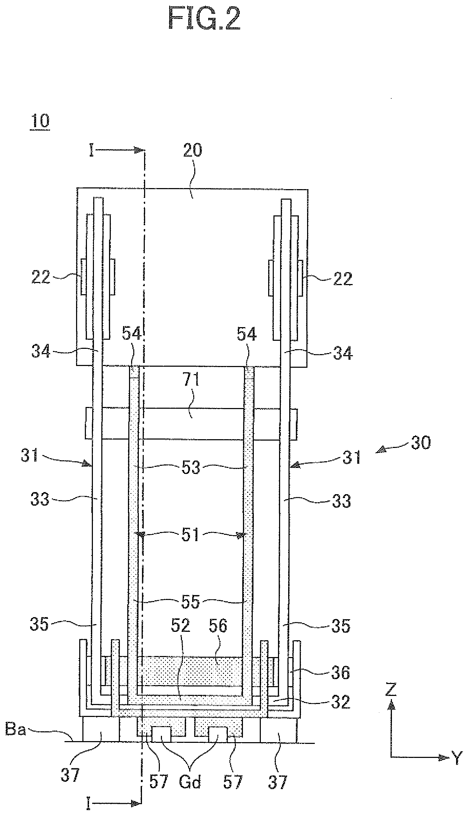

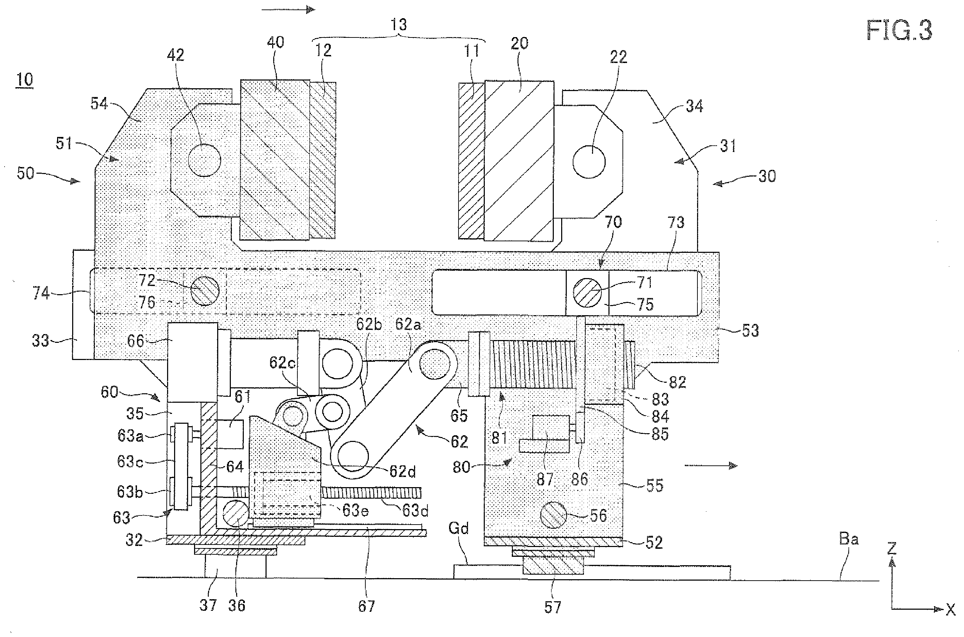

Fig. 1 is a view showing an example of an injection molding machine 10 of the first embodiment at a mold clamping status (a mold closing status). Fig. 1 is a cross-sectional view taken along a I-I line in Fig. 2. Fig. 2 is a front view showing an example of the injection molding machine 10 of the first embodiment. In Fig. 2, a driving unit and an adjusting unit are not shown for an explanation purpose. Fig. 3 is a view showing an example of the injection molding machine 10 of the first embodiment at a mold opening status.

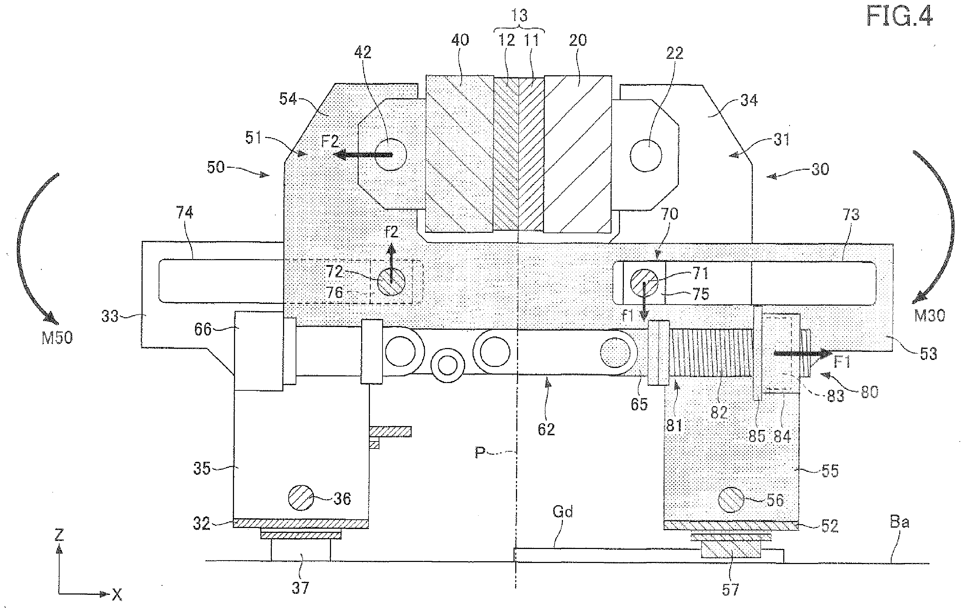

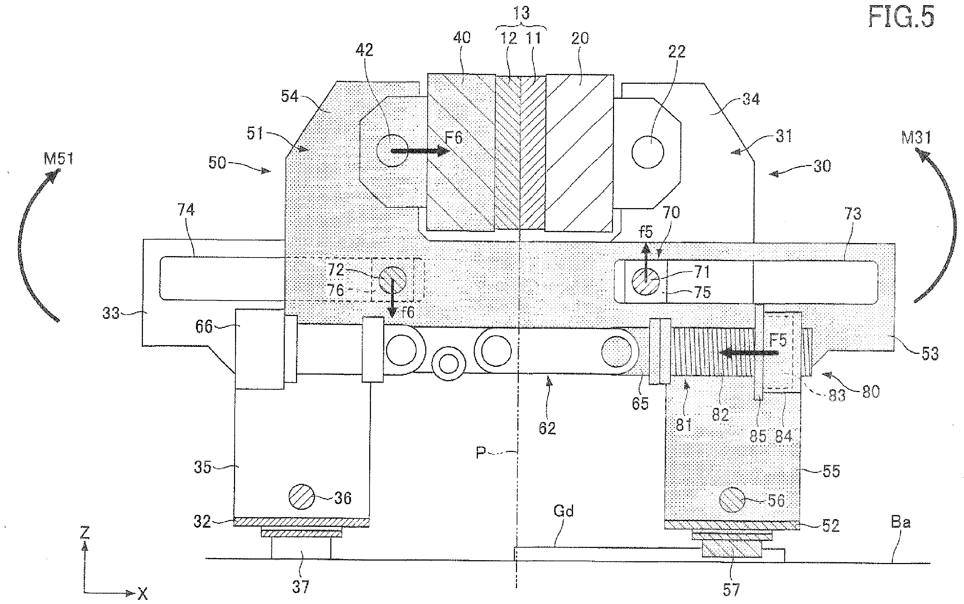

Fig. 4 is a view for explaining rotation moments generated by a mold clamping operation of the injection molding machine 10 of the first embodiment. Fig. 5 is a view for explaining rotation moments generated by a mold opening operation of the injection molding machine 10 of the first embodiment.

In each of the drawings, a direction parallel to a longitudinal direction of a guide Gd mounted on a base Ba of the injection molding machine 10 is referred to as an X-direction. It means that a mold opening and closing direction is in the X-direction. Further, in each of the drawings, a direction parallel to a width direction of the guide Gd is referred to as a Y-direction, and a direction perpendicular to a laying surface of the guide Gd is referred to as a Z-direction. The X-direction, the Y-direction, and the Z-direction are perpendicular with each other. Further in each of the drawings, parts which linearly move in the X-direction in a mold opening and closing operation are shadowed for an explanation purpose.

The injection molding machine 10 is a tie-bar-less injection molding machine.

As shown in Fig. 1, the injection molding machine 10 includes a mold device 13 including a fixed die 11 and a movable die 12. The injection molding machine 10 further includes a fixed-side attaching member 20 to which the fixed die 11 is attached, a fixed-side support member 30 which supports the fixed-side attaching member 20, a movable-side attaching member 40 to which the movable die 12 is attached, and a movable-side support member 50 which supports the movable-side attaching member 40, for example.

When the movable-side support member 50 moves forward and backward in the X-direction, the movable die 12 moves close to and away from the fixed die 11 so that the mold closing operation, the mold clamping operation and the mold opening operation are performed. A molded object is manufactured by the injection molding machine 10 by supplying melted resin in a cavity space (not shown in the drawings) formed between the fixed die 11 and the movable die 12 at the mold clamping status and solidifying it.

The fixed-side attaching member 20 is mounted on a guide table (not shown in the drawings, see the third embodiment). The fixed-side attaching member 20 is oscillatably connected to the fixed-side support member 30 by a pin joint 22. When the fixed-side support member 30 is deformed or oscillated by the mold clamping operation or the mold opening operation, the fixed-side attaching member 20 oscillates to maintain the position of the fixed die 11 with respect to the movable die 12.

As shown in Fig. 2, the fixed-side support member 30 includes a pair of fixed plates 31 facing each other in the Y-direction, and a connecting member 32 connecting the pair of fixed plates 31. As being connected by the connecting member 32, the pair of fixed plates 31 moves together.

Each of the fixed plates 31 is a so-called Z-frame. Each of the fixed plates 31 includes a main body portion 33, a head portion 34 protruding upward from one end portion of the main body portion 33 (right end portion in Fig. 1), and a leg portion 35 protruding downward from the other end portion of the main body portion 33 (left end portion in Fig. 1) formed in an integrated manner. The head portion 34 and the leg portion 35 are protruding from the main body portion 33 in the opposite directions from each other.

The head portion 34 oscillatably supports the fixed-side attaching member 20. The leg portion 35 is immobilizably fixed to the base Ba so that the fixed-side support member 30 cannot move in the X-direction with respect to the base Ba. The leg portion 35 is oscillatably connected to a supporter 37, which is fixed on the base Ba, by a pin joint 36. With this structure, the fixed-side support member 30 is oscillatable with respect to the base Ba.

The movable-side attaching member 40 has a substantially symmetrical shape and has a substantially symmetrical rigidity with the fixed-side attaching member 20. The movable-side attaching member 40 and the fixed-side attaching member 20 are positioned substantially symmetrical with each other having a center surface of the mold device 13 in the width direction as a standard surface P at the mold clamping status. The thickness of the fixed die 11 and the thickness of the movable die 12 may be the same, or may be different.

The movable-side attaching member 40 is mounted on a not-shown guide table on which the fixed-side attaching member 20 is also mounted.

The movable-side attaching member 40 is oscillatably connected to the movable-side support member 50 by a pin joint 42. When the movable-side support member 50 is deformed by the mold clamping operation or the mold opening operation, the movable-side attaching member 40 oscillates to maintain a position of the movable die 12 with respect to the fixed die 11.

As shown in Fig. 1, the movable-side support member 50 has a substantially symmetrical shape and has a substantially symmetrical rigidity with the fixed-side support member 30. The movable-side support member 50 and the fixed-side support member 30 become substantially symmetrical with each other with respect to the standard surface P at the mold clamping status.

As shown in Fig. 2, the movable-side support member 50 includes a pair of movable plates 51 facing each other in the Y-direction and a connecting member 52 connecting the pair of movable plates 51. The movable plates 51 are provided between the fixed plates 31. As being connected by the connecting member 52, the pair of movable plates 51 moves together.

Each of the movable plates 51 is a so-called Z-frame as shown in Fig. 1. Each of the movable plates 51 includes a main body portion 53, a head portion 54 protruding upward from one end portion of the main body portion 53 (left end portion in Fig. 1), and a leg portion 55 protruding from the other end portion of the main body portion 53 (right end portion in Fig. 1) in an integrated manner. The head portion 54 and the leg portion 55 are protruding from the main body portion 53 in the opposite directions from each other.

The head portion 54 oscillatably supports the movable-side attaching member 40. The leg portion 55 is connected to a slider 57, which is movable on the guide Gd provided on the base Ba. With this structure, the movable-side support member 50 is movable with respect to the base Ba. The leg portion 55 is oscillatably connected to the slider 57 by a pin joint 56 so that the movable-side support member 50 is oscillatable with respect to the guide Gd.

Axial directions of pin joints 22, 36, 42 and 56 are in the Y-direction.

The injection molding machine 10 further includes a driving unit 60 which drives the mold clamping operation, the mold opening operation, and the mold closing operation. The driving unit 60 includes a mold clamping motor 61, a toggle mechanism 62 and a transmit mechanism 63. The toggle mechanism 62 amplifies a driving force of the mold clamping motor 61. The transmit mechanism 63 transmits a rotation motion of the mold clamping motor 61 to a linear motion to transmit to the toggle mechanism 62.

The mold clamping motor 61 is supported by a fixed frame 64 which is fixed to the leg portion 35 of the fixed-side support member 30. The mold clamping motor 61 may be a servomotor, for example, and includes an encoder that detects a rotation amount of the mold clamping motor 61. The mold clamping motor 61 is feed-back controlled by a detection result of the encoder so that the movement amount of the movable-side support member 50 becomes a predetermined amount. The mold clamping motor 61 may be provided at the connecting member 32. The mold clamping motor 61 may be provided for each of the pair of the fixed-side support members 30, or may be provided to one of the fixed-side support members 30 and may drive both of the fixed-side support members 30.

The toggle mechanism 62 includes a toggle arm 62a, a first toggle lever 62b, a second toggle lever 62c and a slider 62d.

The toggle arm 62a is oscillatably provided to an arm support member 65 which is fixed to the movable-side support member 50 via an adjusting unit 80, which will be explained later. The toggle arm 62a is oscillatably connected to the first toggle lever 62b.

The first toggle lever 62b is oscillatably provided to the lever support member 66 which is supported by the fixed frame 64. The second toggle lever 62c is provided at a center portion of the first toggle lever 62b to be oscillatable with respect to the first toggle lever 62b and is further oscillatably connected to the slider 62d. The slider 62d is guided in the X-direction by a guide 67 of the fixed frame 64.

The toggle mechanism 62 of the embodiment may be a double toggle although a single toggle is exemplified; the type of the toggle mechanism 62 is not specifically limited.

The transmit mechanism 63 includes a drive pulley 63a which is rotated with an output shaft of the mold clamping motor 61, a driven pulley 63b which is rotatable with respect to the fixed frame 64, and a timing belt 63c which is hung around the drive pulley 63a and the driven pulley 63b. The transmit mechanism 63 further includes a ball screw shaft 63d which is rotatable in accordance with the driven pulley 63b, and a ball nut 63e which is attached to the slider 62d and is screwed with the ball screw shaft 63d. The ball screw shaft 63d and the ball nut 63e function as a motion conversion unit that converts the rotation motion to the linear motion.

The timing belt 63c of the transmit mechanism 63 transmits the rotation motion of the mold clamping motor 61 to the ball screw shaft 63d. As the mold clamping motor 61 and the ball screw shaft 63d are aligned in a lateral direction (the Z-direction) with respect to an axial direction (the X-direction) of the ball screw shaft 63d, the total length of the injection molding machine 10 (in the X-direction) becomes shorter than a case where the mold clamping motor 61 and the ball screw shaft 63d are coaxially connected.

Referring to Fig. 3, when the mold clamping motor 61 is rotated at the mold opening status, the ball screw shaft 63d is also rotated so that the ball nut 63e moves in the X-direction to also move the slider 62d in the X-direction. When the slider 62d moves in a forward direction (rightward direction) in Fig. 3, the movable-side support member 50 also moves in the forward direction so that the mold closing operation is performed. Then, a mold clamping force which is a multiplication of the driving force of the mold clamping motor 61 and the toggle amplification is generated so that the mold clamping operation is performed as shown in Fig. 1. Further, when the slider 62d moves backward (leftward direction in Fig. 1), the movable-side support member 50 also moves backward so that the mold opening operation is performed.

The adjusting unit 80 includes an adjusting rod 81, an adjusting nut 83, and a nut holder 84.

The adjusting unit 80 is connected to the arm support member 65. The adjusting unit 80 is provided with a screw portion 82 formed at an outer periphery surface thereof. The adjusting nut 83 is screwed with the screw portion 82 of the adjusting rod 81. The nut holder 84 rotatably supports the adjusting nut 83. The nut holder 84 is fixed to the movable-side support member 50 and immobilizably supports the adjusting nut 83 in the X-direction with respect to the movable-side support member 50.

The adjusting unit 80 further includes a spur gear 85 with a larger diameter which is rotatable with the adjusting nut 83, a spur gear 86 with a smaller diameter which engages the spur gear 85, and an adjusting motor 87 which rotates the spur gear 86. The spur gear 85 and the spur gear 86 function as a speed reducing unit that amplifies a running torque. The adjusting motor 87 is fixed to the movable-side support member 50. The adjusting motor 87 may be a servomotor, for example, and includes an encoder that detects a rotation amount of the adjusting motor 87.

The screw portion 82 and the adjusting nut 83 function as the motion conversion unit that converts the rotation motion to the linear motion.

The operation of the injection molding machine 10 is explained. The operation of the injection molding machine 10 is controlled by a control unit 19 which is made of a microcomputer or the like.

First, the control unit 19 (a control apparatus) controls the mold closing operation. At the mold opening status as shown in Fig. 3, the control unit 19 controls to drive the mold clamping motor 61 to have the movable-side support member 50 move forward in the X-direction so that the movable die 12 contacts the fixed die 11.

Subsequently, the control unit 19 controls the mold clamping operation. The control unit 19 controls to generate the mold clamping force, which is the multiplication of the driving force of the mold clamping motor 61 and the toggle amplification, between the movable die 12 and the fixed die 11. At this time, melted resin is supplied into a cavity space (not shown in the drawings) generated between the fixed die 11 and the movable die 12, and is solidified.

Subsequently, the control unit 19 controls the mold opening operation. At the mold clamping status as shown in Fig. 1, the control unit 19 controls to drive the mold clamping motor 61 to have the movable-side support member 50 move backward in the X-direction so that the movable die 12 moves away from the fixed die 11. When the mold opening operation is completed, a molded object is taken out from the mold device 13. As the injection molding machine 10 is tie-bar-less, the molded object can be easily taken out.

In this embodiment, the driving unit 60 is positioned to be shifted from the fixed die 11 and the movable die 12 in a lateral direction (the Z-direction) with respect to the mold opening and closing direction (the X-direction). Thus, compared with a case where the driving unit 60, the fixed die 11 and the movable die 12 are aligned in the X-direction, the total length of the injection molding machine 10 can be shortened so that the injection molding machine 10 can be made small and lightweight.

In this embodiment, as described above, the movable-side support member 50 includes the head portion 54 which supports the movable die 12 via the movable-side attaching member 40, the main body portion 53 which extends in the mold opening and closing direction (the X-direction) at least between a position below the head portion 54 and a position below the head portion 34 of the fixed-side support member 30 for each of the fixed plates 31. Further, the driving unit 60 is attached to the leg portion 35 of the fixed-side support member 30 to be shifted from the fixed die 11 and the movable die 12 in the lateral direction (the Z-direction) of the injection molding machine 10 with respect to the mold opening and closing direction (the X-direction).

Further, in this embodiment, as described above, the fixed-side support member 30 includes the head portion 34 which supports the fixed die 11 via the fixed-side attaching member 20, the main body portion 33 which extends in the mold opening and closing direction (the X-direction) at least between a position below the head portion 34 and a position below the head portion 54 of the movable-side support member 50 for each of the movable plates 51.

Thus, the driving force from the driving unit 60 is applied to a lower and right end side (opposite side of the head portion 54) of the body portion 53 of each of the movable plates 51 of the movable-side support member 50 via the toggle mechanism 62. Further, a reaction force of the driving force is applied to a lower and left end side (opposite side of the head portion 34) of the body portion 33 of each of the fixed plates 31 of the fixed-side support member 30 via the toggle mechanism 62.

Therefore, rotation moments are generated by the mold clamping operation as shown in Fig. 4.

For example, in the movable-side support member 50, a driving force F1 from the driving unit 60 which is parallel to the X-direction is applied to a point (which will be referred to as an "applied point") of the movable-side support member 50 connected to the nut holder 84 of the adjusting unit 80. At this time, in the movable-side support member 50, a reaction force F2 from the movable-side attaching member 40 which is parallel to the X-direction is applied to a point (which will be referred to as a "point of action") of the movable-side support member 50 connected to the movable-side attaching member 40.

As the applied point is shifted in the Z-direction from a line which is passing through the point of action and is parallel to the X-direction, a rotation moment M50 is generated in the movable-side support member 50.

Similarly, in the fixed-side support member 30, a reaction force of the driving force F1 from the driving unit 60 which is parallel to the X-direction is applied to an applied point of the fixed-side support member 30 connected to the lever support member 66. At this time, in the fixed-side support member 30, a reaction force from the fixed-side attaching member 20 which is parallel to the X-direction is applied to a point of action of the movable-side attaching member 40 connected to the fixed-side attaching member 20.

As the applied point is shifted in the Z-direction from a line which is passing through the point of action and is parallel to the X-direction, a rotation moment M30 is generated in the fixed-side support member 30.

The center lines of the rotation moments M30 and M50, respectively, become the Y-direction. An applying direction (clockwise direction in Fig. 4) of the rotation moment M30 and an applying direction (counter-clockwise direction in Fig. 4) of the rotation moment M50 are opposite from each other.

The injection molding machine 10 further includes a first rotation moment transmit unit 70 which transmits the rotation moments M30 and M50 between the fixed-side support member 30 and the movable-side support member 50. The first rotation moment transmit unit 70 includes a fixed rod 71, a movable rod 72, a fixed rod insertion hole 73, and a movable rod insertion hole 74 and the like, for example.

The fixed rod 71 is supported by the fixed-side support member 30. For example, the fixed rod 71 is inserted into a through hole provided in the fixed-side support member 30, and is rotatably supported in a wall surface of the through hole. The fixed rod 71 and the fixed-side support member 30 may be integrally formed. An axial direction of the fixed rod 71 is the Y-direction.

Similarly, the movable rod 72 is supported by the movable-side support member 50. For example, the movable rod 72 is inserted into a through hole provided in the movable-side support member 50, and is rotatably supported in a wall surface of the through hole. The movable rod 72 and the movable-side support member 50 may be integrally formed. An axial direction of the movable rod 72 is the Y-direction.

The fixed rod insertion hole 73 is formed in the movable-side support member 50 and is an elongated hole extending in the X-direction.

In this embodiment, the fixed rod 71 is inserted in a fixed rod sliding portion 75 which is provided to be slidable in the fixed rod insertion hole 73 in the X-direction. The fixed rod sliding portion 75 is provided in the fixed rod insertion hole 73 to be in contact with inner surface of the fixed rod insertion hole 73. Thus, the fixed rod 71 is inserted in the fixed rod insertion hole 73 via the fixed rod sliding portion 75.

Specifically, the fixed rod 71 is provided at a right side portion of the main body portion 33 below the head portion 34 of each of the fixed plates 31 of the fixed-side support member 30. On the other hand, the fixed rod insertion hole 73 is provided at a right side portion of the main body portion 53 above the leg portion 55 of each of the movable plates 51 of the movable-side support member 50.

The movable rod insertion hole 74 is formed in the fixed-side support member 30 and is an elongated hole extending in the X-direction.

In this embodiment, the movable rod 72 is inserted in a movable rod sliding portion 76 which is provided to be slidable in the movable rod insertion hole 74 in the X-direction. The movable rod sliding portion 76 is provided in the movable rod insertion hole 74 to be in contact with inner surface of the movable rod insertion hole 74. Thus, the movable rod 72 is inserted in the movable rod insertion hole 74 via the movable rod sliding portion 76.

Specifically, the movable rod 72 is provided at a left side portion of the main body portion 53 below the head portion 54 of each of the movable plates 51 of the movable-side support member 50. On the other hand, movable rod insertion hole 74 is provided at a left side portion of the main body portion 33 above the leg portion 35 of each of the fixed plates 31 of the fixed-side support member 30.

With the above structure, the fixed rod 71, the movable rod 72, the fixed rod insertion hole 73, and the movable rod insertion hole 74 are capable of transmitting the rotation moments M30 and M50 between the fixed-side support member 30 and the movable-side support member 50.

For example, the rotation moment M30 is converted to forces f1 and f2 by the fixed rod 71 and the movable rod 72, respectively, to be transmitted to the movable-side support member 50 to counteract the rotation moment M50.

In this embodiment, as the rotation moments M30 and M50 counteract each other, a bending deformation due to the rotation moments M30 and M50 can be reduced. Thus, the bending rigidity of the injection molding machine 10 (specifically, the fixed-side support member 30 and the movable-side support member 50) can be reduced to be lightweight.

The fixed rod 71 and the movable rod 72 may be provided such that they become substantially symmetrical with each other with respect to the standard surface P at the mold clamping status. The forces f1 and f2 converted by the fixed rod 71 and the movable rod 72 become substantially equal so that the stress becomes even, and the deformation of the fixed-side support member 30 or the deformation of the movable-side support member 50 can be reduced.

Further, the movable-side support member 50 is guided in the X-direction with respect to the fixed-side support member 30 by the fixed rod 71, the movable rod 72, the fixed rod insertion hole 73 and the movable rod insertion hole 74. Thus, the mold opening and closing operations are stabilized.

Although the fixed rod 71 and the movable rod 72 are inserted in the fixed rod sliding portion 75 and the movable rod sliding portion 76 which are slidable in the fixed rod insertion hole 73 and the movable rod insertion hole 74 in the X-direction, respectively, the fixed rod 71 and the movable rod 72 may be provided to slidably contact inner walls of the fixed rod insertion hole 73 and the movable rod insertion hole 74, respectively.

Further, as shown in Fig. 5, rotation moments are generated when starting the mold opening operation in addition to those generated at the mold clamping status. When starting the mold opening operation, the resin formed in the mold device 13 bonds the fixed die 11 and the movable die 12. Thus, a reaction force is generated against the mold opening force to generate the rotation moments by the mold opening force and the reaction force.

For example, in the movable-side support member 50, a driving force F5 from the driving unit 60, which is in the opposite direction from that at the mold clamping status, is applied to the applied point, and a reaction force F6 from the movable-side attaching member 40, which is in the opposite direction from that at the mold clamping status, is applied to the point of action. Therefore, a rotation moment M51 which is in the opposite direction from the rotation moment 50 at the mold clamping status is generated in the movable-side support member 50.

Similarly, a rotation moment M31 which is in the opposite direction from the rotation moment M30 at the mold clamping status is generated in the fixed-side support member 30.

The center lines of the rotation moments M31 and M51, respectively, become the Y-direction. An applying direction of the rotation moment M31 and an applying direction of the rotation moment M51 are opposite from each other.

With the above structure, as explained above, the fixed rod 71, the movable rod 72, the fixed rod insertion hole 73, and the movable rod insertion hole 74 are capable of transmitting the rotation moments M31 and 51 between the fixed-side support member 30 and the movable-side support member 50.

For example, the rotation moment M31 is converted to forces f5 and f6 by the fixed rod 71 and the movable rod 72, respectively, to be transmitted to the movable-side support member 50 to counteract the rotation moment M51. With this, the mold opening operation, which is a linear motion, is stabilized.

The fixed-side support member 30 and the movable-side support member 50 have substantially symmetrical shapes. Thus, the magnitude of the rotation moment M30 which is generated in the fixed-side support member 30 by the mold clamping operation, and the magnitude of the rotation moment M50 generated in the movable-side support member 50 by the mold clamping operation become substantially the same, so that the rotation moments M30 and M50 become the substantially the same to counteract each other.

Further, as the magnitude of the rotation moment M31 generated in the fixed-side support member 30 by the mold opening operation and the magnitude of the rotation moment M51 generated in the movable-side support member 50 by the mold opening operation become substantially the same, the rotation moments M31 and M51 become the substantially the same to counteract each other.

The movable-side support member 50 is oscillatable with respect to the guide Gd. Thus, when the movable-side support member 50 is deformed by the mold clamping operation or the mold opening operation, the movable-side support member 50 oscillates so that the transmission of the stress from the movable-side support member 50 to the guide Gd is reduced to decrease the deformation of the guide Gd.

Further, the fixed-side support member 30 is oscillatable with respect to the base Ba. Thus, when the fixed-side support member 30 is deformed by the mold clamping operation or the mold opening operation, the fixed-side support member 30 oscillates by an amount similar to that of the movable-side support member 50 so that the behavior of the fixed-side support member 30 and the behavior of the movable-side support member 50 become substantially symmetrical with respect to the standard surface P. Thus, the rotation moments M30, M50, M31 and M51 can be effectively reduced.

As the injection molding machine 10 of the embodiment is tie-bar-less, it is easy to exchange the mold device 13. When the mold device 13 is exchanged, the thickness of the mold device 13 (the total thickness of the fixed die 11 and the movable die 12) may change. The thickness of the mold device 13 may also change due to a temperature change of the mold device 13.

The adjusting unit 80 adjusts the relative position of the fixed-side support member 30 and the movable-side support member 50 at the mold clamping status in order to obtain an appropriate mold clamping force in accordance with the thickness of the mold device 13. The adjustment by the adjusting unit 80 may be performed at any status of the mold closing, the mold clamping, and the mold opening statuses.

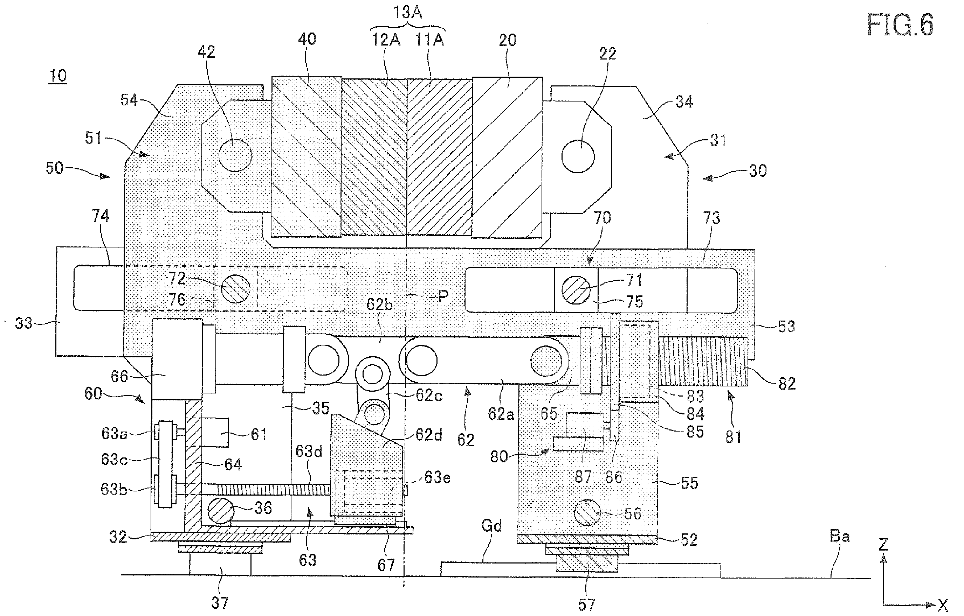

Fig. 6 is a view for explaining an operation of the adjusting unit 80 of the injection molding machine 10 of the first embodiment. Fig. 6 is a view showing an example of the injection molding machine 10 at the mold clamping status where the mold device 13 shown in Fig. 1 is exchanged for a new mold device 13A, and the adjustment by the adjusting unit 80 in accordance with the thickness of the new mold device 13A is performed.

When the adjusting motor 87 is rotated, the adjusting nut 83 moves in the X-direction with respect to the adjusting rod 81 while being rotated so that the movable-side support member 50 is also moved in the X-direction with respect to the fixed-side support member 30. The adjusting motor 87 is feed-back controlled by a detection result of the encoder so that the rotation amount of the adjusting nut 83 becomes a predetermined amount. The movement amount and the moving direction of the adjusting rod 81 are determined based on a difference between the thickness of the previous mold device 13 and the thickness of the current mold device 13A.

For example, when the thickness of the mold device becomes greater by exchanging the mold device, the adjusting nut 83 is moved backward with respect to the adjusting rod 81. This operation corresponds to a change from the status shown in Fig. 1 to the status shown in Fig. 6. With this operation, a space between the leg portion 55 of the movable-side support member 50 and the leg portion 35 of the fixed-side support member 30 is made smaller while a space between the head portion 54 of the movable-side support member 50 and the head portion 34 of the fixed-side support member 30 is expanded. Thus, an angle formed by the toggle arm 62a and the first toggle lever 62b is maintained at a predetermined value (for example, about 180°) at the mold clamping status so that an appropriate mold clamping force can be obtained.

On the other hand, when the thickness of the mold device is reduced by exchanging the mold device, the adjusting nut 83 is moved forward with respect to the adjusting rod 81. This operation corresponds to a change from the status shown in Fig. 6 to the status shown in Fig. 1. With this operation, the space between the leg portion 55 of the movable-side support member 50 and the leg portion 35 of the fixed-side support member 30 is expanded while the space between the head portion 54 of the movable-side support member 50 and the head portion 34 of the fixed-side support member 30 is made smaller. Thus, the angle formed by the toggle arm 62a and the first toggle lever 62b is maintained at the predetermined value (for example, about 180°) at the mold clamping status so that an appropriate mold clamping force can be obtained.

When the thickness of the movable die or the thickness of the fixed die changes by exchanging the mold device and the position of the standard surface P also changes, the fixed-side support member 30 and the movable-side support member 50 are still substantially symmetrical with each other with respect to the standard surface P at the mold clamping status. Thus, the fixed rod 71 and the movable rod 72 are still substantially symmetrical with each other with respect to the standard surface P at the mold clamping status. Therefore, even after exchanging the mold device, the forces f1 and f2 converted at the fixed rod 71 and the movable rod 72, respectively, become substantially equal to each other so that the stress is dispersed and the deformation of the fixed-side support member 30 and the deformation of the movable-side support member 50 can be reduced.

The fixed rod 71 and the movable rod 72 may be relatively movable in order to change the relative positions.

According to the embodiment, as the adjusting motor 87 and the mold clamping motor 61 are respectively attached to one of and the other of the fixed-side support member 30 and the movable-side support member 50, the fixed-side support member 30 and the movable-side support member 50 having substantially symmetrical shapes can be made small.

### (Second embodiment)

For the injection molding machine 10 of the first embodiment, the mold clamping operation and the mold opening and closing operation are driven by the toggle mechanism 62. However, according to the injection molding machine of an embodiment, the mold clamping operation is driven by an electromagnet and the mold opening and closing operations are driven by a linear motor.

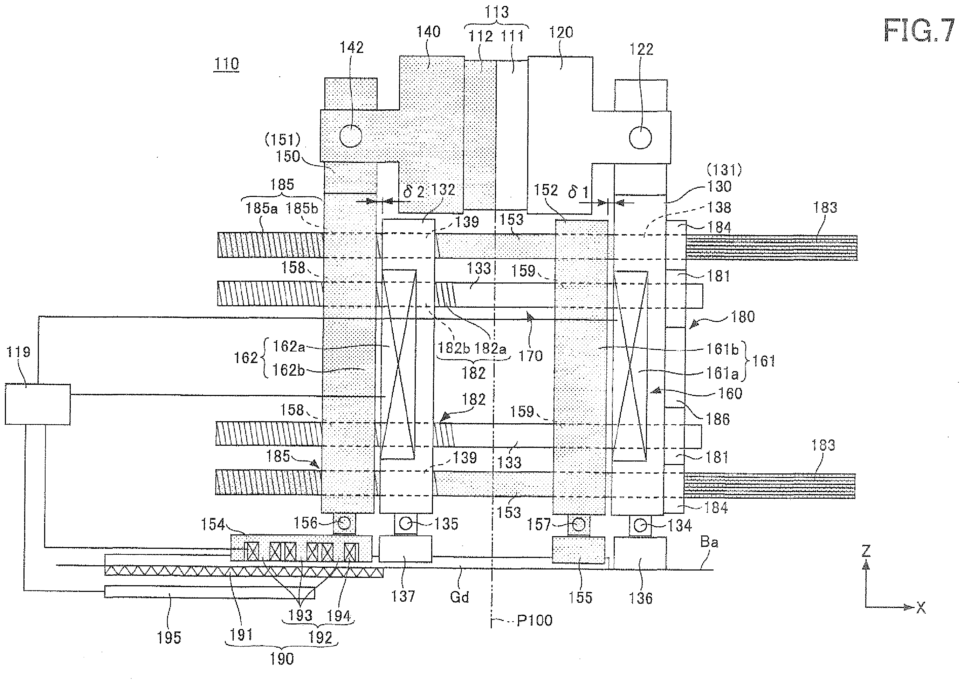

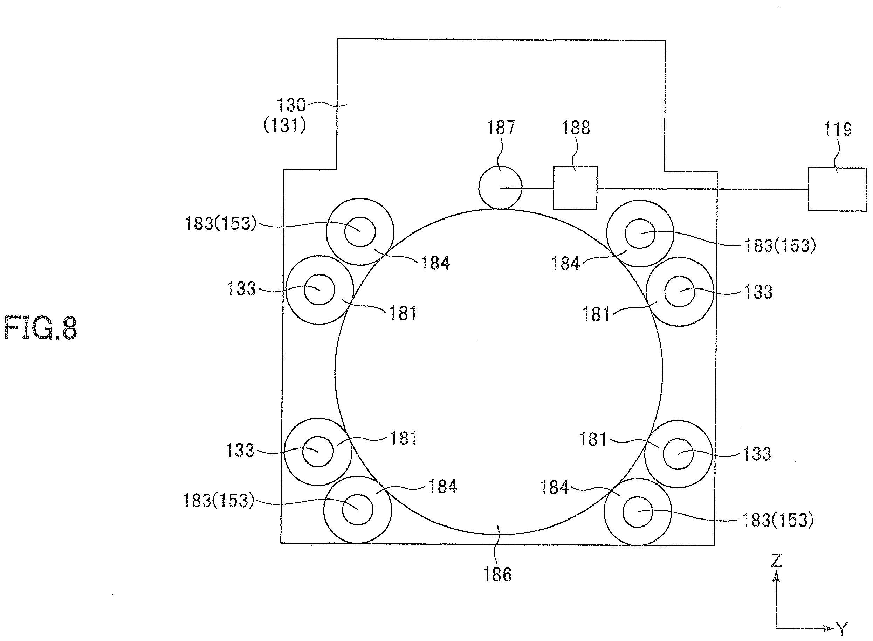

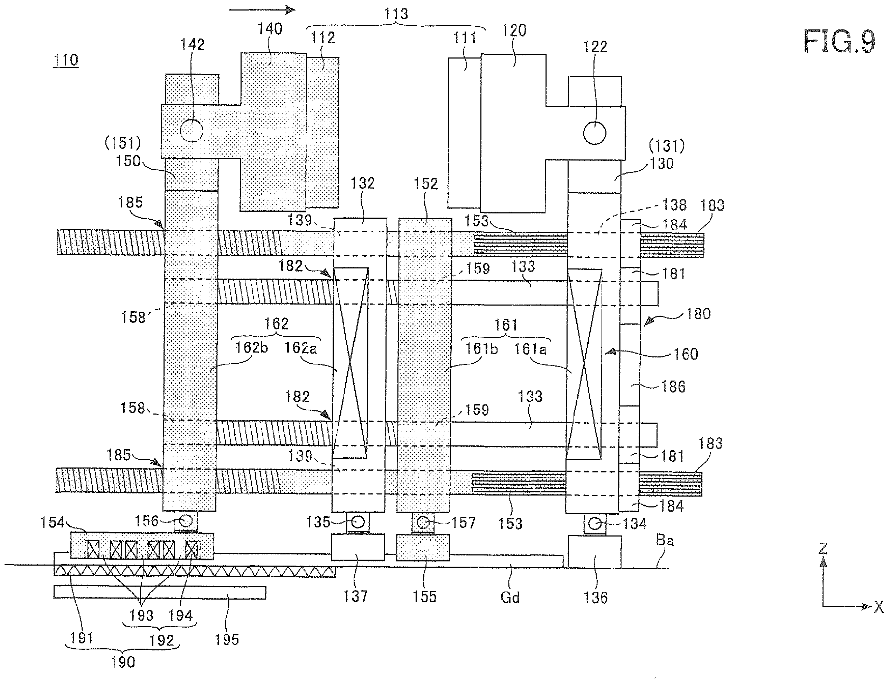

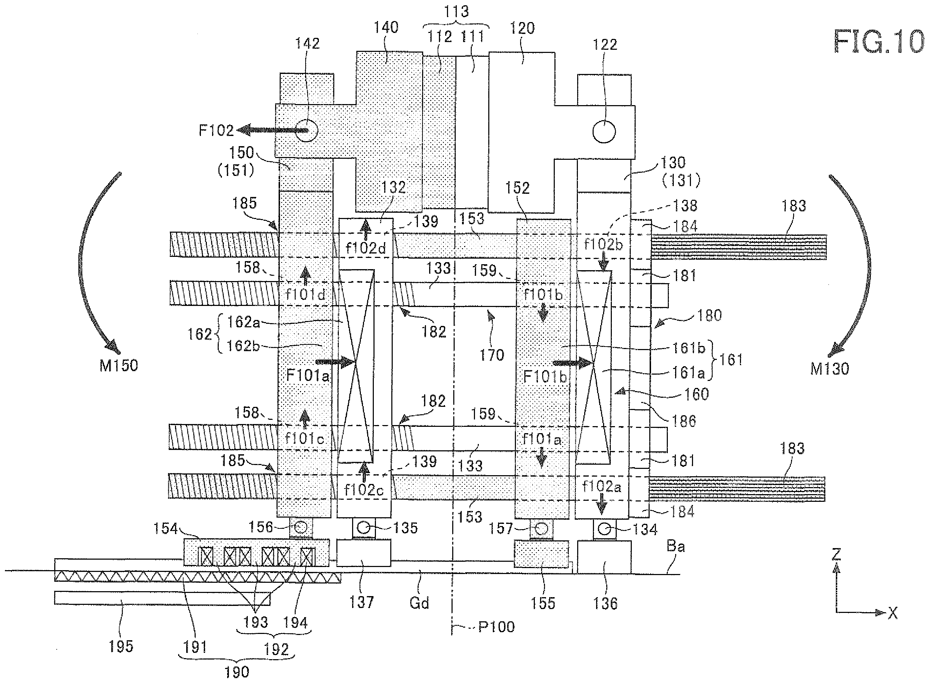

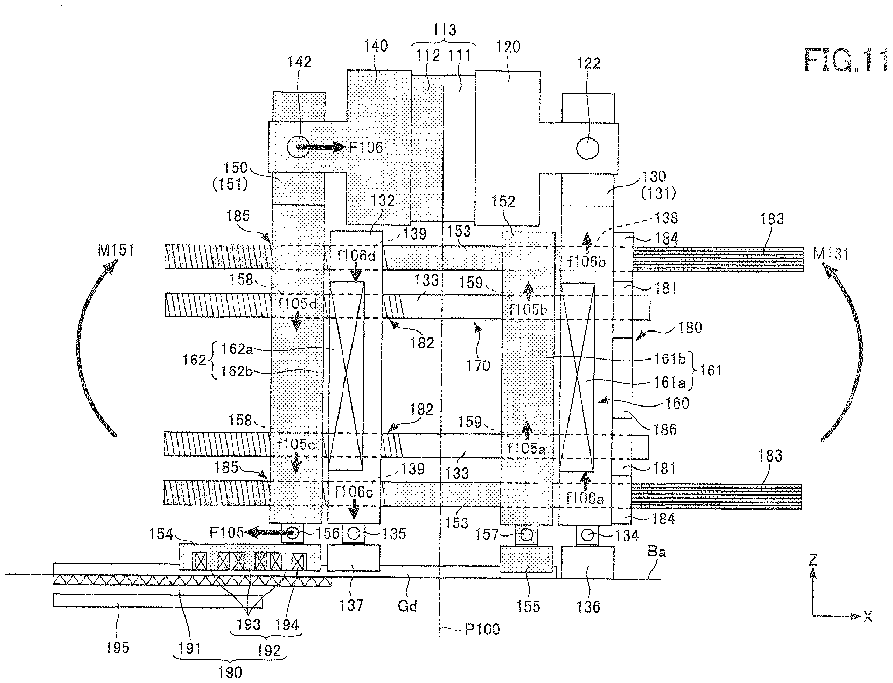

Fig. 7 is a view showing an injection molding machine 110 of the second embodiment at the mold clamping status. Fig. 8 is a front view showing an example of a fixed-side support member 130 of the second embodiment. Fig. 9 is a view showing an example of the injection molding machine 110 of the second embodiment at the mold opening status. Fig. 10 is a view for explaining rotation moments generated by the mold clamping operation of the injection molding machine 110 of the second embodiment. Fig. 11 is a view for explaining rotation moments generated by the mold opening operation of the injection molding machine 110 of the second embodiment.

In each of the drawings, a direction parallel to a longitudinal direction of the guide Gd mounted on the base Ba of the injection molding machine 110 is referred to as the X-direction. Further, in each of the drawings, a direction parallel to a width direction of the guide Gd is referred to as the Y-direction, and a direction perpendicular to a laying surface of the guide Gd is referred to as the Z-direction. The X-direction, the Y-direction, and the Z-direction are perpendicular with each other. Further in each of the drawings, parts which linearly move in the X-direction in a mold opening and closing operation are shadowed.

The injection molding machine 110 is a tie-bar-less injection molding machine.

As shown in Fig. 7, the injection molding machine 110 includes a mold device 113 including a fixed die 111 and a movable die 112. The injection molding machine 110 further includes a fixed-side attaching member 120 to which the fixed die 111 is attached, the fixed-side support member 130 which supports the fixed-side attaching member 120, a movable-side attaching member 140 to which the movable die 112 is attached, and a movable-side support member 150 which supports the movable-side attaching member 140, for example.

In this embodiment, the fixed-side support member 130 includes a first fixed member 131 which supports the fixed-side attaching member 120, a second fixed member 132, and fixed rods 133, which will be explained later.

Similarly, the movable-side support member 150 includes a first movable member 151 which supports the movable-side attaching member 140, a second movable member 152, and movable rods 153, which will be explained later.

When the movable-side support member 150 moves forward and backward in the X-direction, the movable die 112 moves close to and away from the fixed die 111 so that the mold closing operation, the mold clamping operation, and the mold opening operation are performed. A mold object is manufactured by the injection molding machine 110 by supplying melted resin in a cavity space (not shown in the drawings) formed between the fixed die 111 and the movable die 112 at the mold clamping status and solidifying it.

The fixed-side attaching member 120 is mounted on a guide table (not shown in the drawings, see the third embodiment). The fixed-side attaching member 120 is oscillatably connected to the first fixed member 131 by a pin joint 122. When the fixed-side support member 130 is deformed or oscillated by the mold clamping operation or the mold opening operation, the fixed-side attaching member 120 oscillates to maintain the position of the fixed die 111 with respect to the movable die 112.

The first fixed member 131 is immobilizably fixed to the base Ba. The first fixed member 131 is oscillatably connected to a supporter 136, which is fixed on the base Ba, via a pin joint 134. With this, the first fixed member 131 is oscillatable with respect to the base Ba.

Tee second fixed member 132 is provided with a predetermined interval with the first fixed member 131. In order to change the space between the second fixed member 132 and the first fixed member 131, the second fixed member 132 is connected to a slider 137, which is movable on the guide Gd provided on the base Ba. The second fixed member 132 is oscillatably connected to the slider 137 via a pin joint 135, and is oscillatable with respect to the guide Gd.

The first fixed member 131 and the second fixed member 132 are connected by the plural (for example, four) fixed rods 133. Each of the fixed rods 133 penetrates the first movable member 151 and the second movable member 152 of the movable-side support member 150. The second movable member 152 is provided with a predetermined interval from the first movable member 151. It means that the each of the fixed rods 133 is provided to penetrate the first fixed member 131, the second movable member 152, the second fixed member 132, and the first movable member 151 from the right side in this order.

The movable-side attaching member 140 has a substantially symmetrical shape and has a substantially symmetrical rigidity with the fixed-side attaching member 120. The movable-side attaching member 140 and the fixed-side attaching member 120 are positioned substantially symmetrical with each other having a center surface of the mold device 113 in the width direction as a standard surface P100 at the mold clamping status. The thickness of the fixed die 111 and the thickness of the movable die 112 may be the same, or may be different.

The movable-side attaching member 140 is mounted on a not-shown guide table on which the fixed-side attaching member 120 is also mounted.

The movable-side attaching member 140 is oscillatably connected to the first movable member 151 by a pin joint 142. When the movable-side support member 150 is deformed by the mold clamping operation or the mold opening operation, the movable-side attaching member 140 oscillates to maintain the position of the movable die 112 with respect to the fixed die 111.

The first movable member 151 of the movable-side support member 150 has a substantially symmetrical shape and a substantially symmetrically rigidity with the first fixed member 131 of the fixed-side support member 130. The first movable member 151 of the movable-side support member 150 and the first fixed member 131 of the fixed-side support member 130 are provided to be substantially symmetrical with each other with respect to the standard surface P100 at the mold clamping status.

The first movable member 151 is connected to a slider 154, which is movable on the guide Gd. Thus, the first movable member 151 is movable with respect to the base Ba. The first movable member 151 is oscillatably connected to the slider 154 via a pin joint 156, and is oscillatable with respect to the guide Gd. As described above, the second movable member 152 is provided to have a predetermined interval with the first movable member 151.

In order to variably change a space between the second movable member 152 and the first movable member 151 of the movable-side support member 150, the second movable member 152 is connected to a slider 155 which is different from the slider 154 to which the first movable member 151 is connected and is movable on the guide Gd. With this, the second movable member 152 is movable with respect to the base Ba. The second movable member 152 is oscillatably connected to the slider 155 via a pin joint 157, and is oscillatable with respect to the guide Gd.

Axial directions of pin joints 122, 134, 135, 142, 156 and 157 are in the Y-direction.

The first movable member 151 and the second movable member 152 are connected by the plural (for example, four) movable rods 153. Each of the movable rods 153 penetrates the first fixed member 131 and the second fixed member 132 of the fixed-side support member 130. It means that the each of the movable rods 153 is provided to penetrate the first fixed member 131, the second movable member 152, the second fixed member 132, and the first movable member 151 from the right side in this order.

The first fixed member 131, the second movable member 152, the second fixed member 132, and the first movable member 151 are aligned in this order in the X-direction with predetermined intervals. The first movable member 151, the second movable member 152 and the movable rod 153 of the movable-side support member 150 integrally move in the mold open and closing operation.

The injection molding machine 110 includes a linear motor 190 as a mold opening and closing driving unit for driving the mold opening and closing operations. The linear motor 190 is provided between the first movable member 151 and the base Ba. Alternatively, the linear motor 190 may be provided between the second movable member 152 and the base Ba.

The linear motor 190 includes a fixed component 191 and a movable component 192. The fixed component 191 is fixed on the base Ba and is provided to correspond to a movement range of the movable component 192. The movable component 192 is fixed to the slider 154, for example, which is connected to the first movable member 151 and is provided to face the fixed component 191 at the predetermined movable range.

The fixed component 191 includes plural permanent magnets (not shown in the drawings) aligned in the X-direction with intervals. The plural permanent magnets are alternately polarized to be a north pole and a south pole at the movable component 192 side.

The movable component 192 includes plural magnetic pole teeth 193 aligned in the X-direction with intervals, and plural coils 194 provided to be wound around the corresponding magnetic pole teeth 193. The position of the movable component 192 is detected by a position sensor 195 which is fixed to the base Ba.

When the linear motor 190 is driven by supplying a predetermined current to the coils 194, the movable component 192 is moved. In accordance with the movement of the movable component 192, the first movable member 151 is also moved so that the mold opening and closing operation is performed. The linear motor 190 is feed-back controlled by the detection results of the position sensor 195 so that the position of the movable component 192 becomes a target position.

Although in this embodiment, the permanent magnets are provided to the fixed component 191 and the coils 194 are provided to the movable component 192, alternatively, coils may be provided to the fixed component 191 and permanent magnets may be provided to the movable component 192. In such a case, as the coils are not moved in accordance with the driving of the linear motor 190, wiring for supplying electric power to the coils can be simplified.

Further, for the driving unit which drives the mold opening and closing operation, a driving unit including a rotation motor and a ball screw mechanism, a fluid pressure cylinder such as a hydraulic cylinder or a pneumatic cylinder, or the like may be used instead of the linear motor 190.

The injection molding machine 110 further includes a mold clamping driving unit 160. The mold clamping driving unit 160 includes electromagnet units 161 and 162 which drive the mold clamping operation.

The electromagnet unit 161 includes an electromagnet 161a formed at the first fixed member 131 of the fixed-side support member 130, and an absorption unit 161b formed at the second movable member 152. Similarly, the electromagnet unit 162 includes an electromagnet 162a formed at the second fixed member 132, and an absorption unit 162b formed at the movable-side support member 150. The absorption units 161b and 162b are formed of ferromagnetic material. The absorption units 161b and 162b may be formed of stacked steel plates, for example.

Further in this embodiment, although the electromagnets 161a and 162a are formed separately from the first fixed member 131 and the second fixed member 132, and the absorption units 161b and 162b are formed separately from the first movable member 151 and the second movable member 152, respectively, electromagnets may be formed as parts of the first fixed member 131 and the second fixed member 132, and absorption units may be formed as parts of the first movable member 151 and the second movable member 152, respectively. Further, the electromagnets and the absorption units may be oppositely positioned. For example, the absorption units may be provided at the fixed member side, and the electromagnets may be provided at the movable member side.

When supplying currents to the electromagnets 161a and 162a to activate the electromagnets 161a and 162a in the electromagnet units 161 and 162, the electromagnets 161a and 162a form magnetic fields that pass through absorption units 161b and 162b, respectively, to generate the mold clamping force. The electromagnet units 161 and 162 function as the mold clamping driving unit 160 in cooperation with the second fixed member 132, the fixed rod 133, the second movable member 152, the movable rod 153 and the like.

Operations of the injection molding machine 110 are explained. Each of the operations of the injection molding machine 110 is controlled by the control unit 119 which is composed of a microcomputer.

First, the control unit 119 controls the mold closing operation. The control unit 119, at the mold opening status shown in Fig. 9, controls to supply a current to the coils 194 of the linear motor 190 to have the movable component 192 move forward in the X-direction. Then, the movable-side support member 150 moves forward so that the movable die 112 contacts the fixed die 111 as shown in Fig. 7. At this time, a gap δ1 is formed between the electromagnet 161a and the absorption unit 161b which are facing each other, and a gap δ2 is formed between the electromagnet 162a and the absorption unit 162b which are facing each other (see Fig. 7).

Subsequently, the control unit 119 controls the mold clamping operation. The control unit 119 controls to supply currents to the electromagnets 161a and 162a to have the electromagnets 161a and 162a attract the absorption units 161b and 162b, respectively. With this operation, the mold clamping force is generated between the fixed die 111 and the movable die 112. At this time, the melted resin is supplied into the cavity space (not shown in the drawings) formed between the fixed die 111 and the movable die 112. When the resin in the cavity space is solidified, the control unit 119 stops supplying of the currents to the electromagnets 161a and 162a.

Subsequently, the control unit 119 controls the mold opening operation. The control unit 119, at the mold clamping status in Fig. 7, supplies a current to the coils 194 of the linear motor 190 to have the movable component 192 move backward in the X-direction. Then, the movable-side support member 150 moves backward so that the movable die 112 is separated from the fixed die 111. When the mold opening operation is completed, a molded object is taken out from the mold device 113. As the injection molding machine 110 is tie-bar-less, the molded object can be easily taken out.

In this embodiment, similar to the first embodiment, the mold clamping driving unit 160 is positioned to be shifted from the fixed die 111 and the movable die 112 in a lateral direction (the Z-direction) with respect to a mold opening and closing direction (the X-direction). Thus, compared with the conventional case, the total length of the injection molding machine 110 can be shortened so that the injection molding machine 110 can be made small and lightweight.

As the mold clamping driving unit 160 is positioned to be shifted from the fixed die 111 and the movable die 112 in the lateral direction (the Z-direction) with respect to the mold opening and closing direction (the X-direction), rotation moments are generated by the mold clamping operation as shown in Fig. 10.

For example, in the first movable member 151 and the second movable member 152, as applied points to which forces F101a and F101b from the mold clamping driving unit 160 parallel to the X-direction are applied, respectively, are shifted in the Z-direction from a line parallel to the X-direction passing through a point of action to which a reaction force F102 from the movable-side attaching member 140 parallel to the X-direction is applied, a rotation moment M150 is generated.

Similarly, in the first fixed member 131 and the second fixed member 132, as applied points to which forces from the mold clamping driving unit 160 parallel to the X-direction are applied, respectively, are shifted in the Z-direction from a line parallel to the X-direction passing through a point of action to which a reaction force parallel to the X-direction is applied, a rotation moment M130 is generated.

The center lines of the rotation moments M130 and M150, respectively, become the Y-direction. An applying direction (clockwise direction in Fig. 10) of the rotation moment M130 and an applying direction (counter-clockwise direction in Fig. 10) of the rotation moment M150 are opposite from each other.

The injection molding machine 110 further includes a first rotation moment transmit unit 170 which transmits the rotation moments M130 and M150 between the fixed-side support member 130 and the movable-side support member 150.

Specifically, the function of the first rotation moment transmit unit 170 is performed by the plural fixed rods 133, the plural movable rods 153, movable rod insertion holes 138 and 139, fixed rod insertion holes 158 and 159 and the like.

The movable rods 153 are movably inserted into the movable rod insertion holes 138 provided at the first fixed member 131, and the movable rod insertion holes 139 provided at the second fixed member 132, respectively, in the axial direction. The fixed rods 133 are movably inserted into the fixed rod insertion holes 158 provided at the first movable member 151 and the fixed rod insertion holes 159 provided at the second movable member 152, respectively, in the axial direction. Further, by the fixed rods 133, the movable rods 153, the movable rod insertion holes 138 and 139, and the fixed rod insertion holes 158 and 159, the movable-side support member 150 is guided in the X-direction with respect to the fixed-side support member 130. Thus, the mold opening and closing operation can be stabilized.

With the above structure, the fixed rods 133, the movable rods 153, movable rod insertion holes 138 and 139, and the fixed rod insertion holes 158 and 159 are capable of transmitting the rotation moments M130 and M150 between the fixed-side support member 130, and the movable-side support member 150.

For example, the rotation moment M130 is converted to forces f101a to f101d and forces f102a to f102b at the fixed rod 133 and the movable rod 153, respectively, to be transmitted to the first movable member 151 and the second movable member 152 to reduce the rotation moment M150.

As the rotation moments M130 and M150 counteract each other, the bending deformation by the rotation moments M130 and M150 can be reduced. Thus, the bending rigidity of the injection molding machine 110 (specifically, the fixed-side support member 130 and the movable-side support member 150) can be reduced so that the injection molding machine 110 can be lightweight.

The axial directions of the fixed rods 133 and the axial directions of the movable rods 153 are in the X-direction. Thus, the fixed rods 133 and the movable rods 153 hardly interfere with other components at the mold opening and closing operations. Therefore, the numbers of the fixed rods 133 and the movable rods 153 can be increased to increase transmission paths between the rotation moments 130 and 150 so that the stress can be dispersed to reduce the deformation of the fixed-side support member 130 or the movable-side support member 150.

Further, as shown in Fig. 11, rotation moments are generated when starting the mold opening operation in addition to those generated at the mold clamping status. When starting the mold opening operation, the resin formed in the mold device 113 bonds the fixed die 111 and the movable die 112. Thus, a reaction force is generated against the mold opening force to generate the rotation moments by the mold opening force and the reaction force.

For example, in the movable-side support member 150, as a driving force F105 which is in the opposite direction from that at the mold clamping status is applied to the applied point, and a reaction force F106 which is in the opposite direction from that at the mold clamping status is applied to the point of action, a rotation moment M151 which is in the opposite direction from the rotation moment M150 at the mold clamping status is generated.

Similarly, in the fixed-side support member 130, a rotation moment M131 which is in the opposite direction from the rotation moment M130 at the mold clamping status is generated. The center lines of the rotation moments M131 and M151, respectively, become the Y-direction. An applying direction of the rotation moment M131 and an applying direction of the rotation moment M151 are opposite from each other.

The fixed rods 133, the movable rods 153, the movable rod insertion holes 138 and 139, and the fixed rod insertion holes 158 and 159 transmit the rotation moments M131 and M151 between the fixed-side support member 130 and the movable-side support member 150.

For example, the rotation moment M131 is transmitted to the movable-side support member 150 and the second movable member 152 after being converted to forces f105a to f105d at the fixed rods 133 and the movable rods 153 to reduce the rotation moment M151. Thus, the mold opening operation, which is the linear motion, is stabilized.

The first fixed member 131 and the first movable member 151 have substantially symmetrical shapes, and the second fixed member 132 and the second movable member 152 have substantially symmetrical shapes.

Thus, the magnitude of the rotation moment M130 generated at the first fixed member 131 and the second fixed member 132 by the mold clamping operation, and the magnitude of the rotation. moment M150 generated at the first movable member 151 and the second movable member 152 by the mold clamping operation become substantially the same to balance the rotation moments M130 and M150 to counteract each other.

Further, the magnitude of the rotation moment M131 generated at the first fixed member 131 and the second fixed member 132 by the mold opening operation, and the magnitude of the rotation moment M151 generated at the first movable member 151 and the second movable member 152 by the mold opening operation become substantially the same to balance the rotation moments M131 and M151 to counteract each other.

The first movable member 151 is oscillatable with respect to the guide Gd. Thus, when the first movable member 151 is deformed by the mold clamping operation or the mold opening operation, the first movable member 151 oscillates to reduce the stress transmitted from the first movable member 151 to the guide Gd to reduce the deformation of the guide Gd.

Further, the first fixed member 131 is oscillatable with respect to the base Ba. Thus, when the first fixed member 131 is deformed by the mold clamping operation or the mold opening operation, the first fixed member 131 oscillates by an amount similar to that of the first movable member 151 so that the behavior of the first fixed member 131 and the behavior of the first movable member 151 become substantially symmetrical with respect to the standard surface P100. Thus, the rotation moments M130, M150, M131 and M151 can be effectively reduced.

As the injection molding machine 110 of the embodiment is tie-bar-less, it is easy to exchange the mold device 113. When the mold device 113 is exchanged, the thickness of the mold device 113 (the total thickness of the fixed die 111 and the movable die 112) may change. The thickness of the mold device 113 may change due to a temperature change of the mold device 113.

The injection molding machine 110 further includes an adjusting unit 180 which adjusts the relative position of the fixed-side support member 130 and the movable-side support member 150 at the mold clamping status in order to obtain an appropriate mold clamping force in accordance with the thickness of the mold device 113. The adjustment by the adjusting unit 180 may be performed at any status of the mold closing, the mold clamping, and the mold opening statuses.

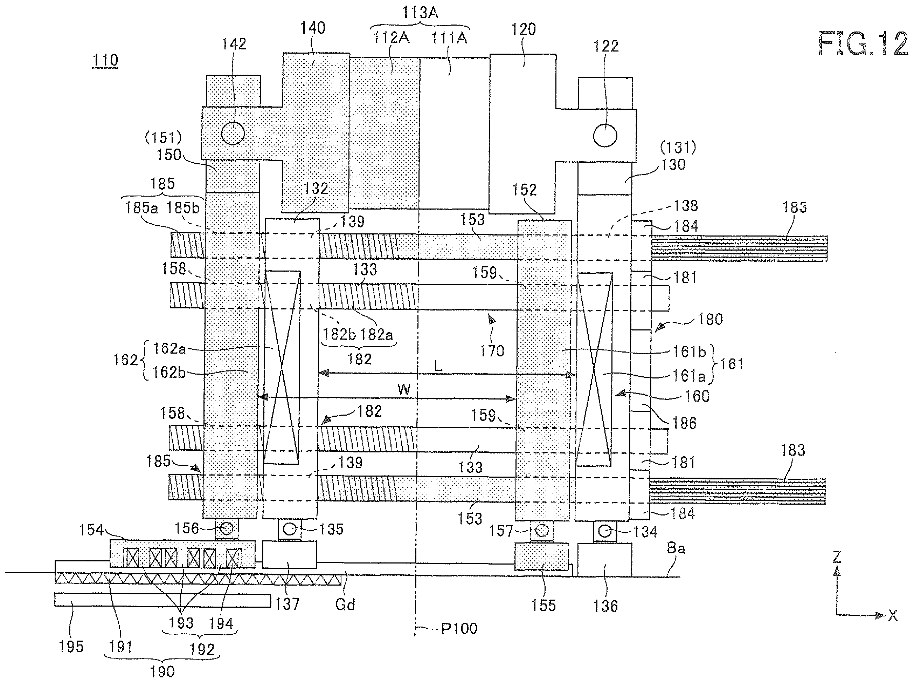

Fig. 12 is a view for explaining an operation of the adjusting unit 180 of the injection molding machine 110 of the second embodiment. Fig. 12 is a view showing an example of the injection molding machine 110 at the mold clamping status where the mold device 113 shown in Fig. 7 is exchanged for a new mold device 113A, and the adjustment by the adjusting unit 180 in accordance with the thickness of the mold device 113A is performed.

The adjusting unit 180 adjusts a distance between the first fixed member 131 of the fixed-side support member 130 and the first movable member 151 of the movable-side support member 150 by adjusting a space L between the first fixed member 131 and the second fixed member 132, and a space W between the second movable member 152 and the first movable member 151 in accordance with the thicknesses of the mold devices 113 and 113A.

The adjusting unit 180 includes plural sleeves 181, each of which is connected to an end portion of the corresponding fixed rod 133, and is capable of rotating with the respective fixed rod 133 for adjusting the space L between the first fixed member 131 and the second fixed member 132. Each of the sleeves 181 is rotatably supported at a front surface of the first fixed member 131, and is immobilizably attached to the first fixed member 131 in the X-direction. The sleeves 181 are provided to correspond to the plural fixed rods 133 to be coaxial with the corresponding fixed rods 133.

Each of the fixed rods 133 is provided with a screw axial portion 182a for adjusting the space L. The screw axial portion 182a is provided at a portion which penetrates the second fixed member 132. Further, the second fixed member 132 is provided with screw holes 182b to correspond to the screw axial portions 182a of the fixed rods 133, respectively. The screw axial portion 182a is formed to be longer than the thickness of the second fixed member 132 and is screwed into the respective screw hole 182b formed in the second fixed member 132. The screw axial portions 182a and the screw holes 182b function as a motion conversion unit 182 which converts a rotation motion to a linear motion.

In the adjusting unit 180, when each of the sleeves 181 rotates for a predetermined amount, the screw axial portion 182a formed at the respective fixed rod 133 is also rotated so that the second fixed member 132 screwed with the screw axial portion 182a moves in the X-direction to adjust the space L.

The motion conversion unit 182 may be in various structures and may be a ball screw mechanism including a ball screw nut rotatably supported by the second fixed member 132 and a ball screw shaft portion which is formed at a portion of the fixed rod 133 penetrating the second fixed member 132, for example. When the ball screw nut is rotated, the relative position between the ball screw shaft portion screwed into the ball screw nut and the second fixed member 132 changes so that the second fixed member 132 is moved.

Each of the movable rods 153 is provided with a spline shaft portion 183 at an end portion thereof and a spline nut 184 to movably support the respective spline shaft portion 183 in the X-direction, for adjusting the space W between the second movable member 152 and the first movable member 151, and enabling the movement of the movable rod 153 at the mold opening and closing operation. Each of the spline nuts 184 is rotatably supported at the front surface of the first fixed member 131, and is immobilizably attached to the first fixed member 131 in the X-direction.

Each of the movable rods 153 is further provided with a screw axial portion 185a for adjusting the space W. The screw axial portion 185a is provided at a portion which penetrates the first movable member 151. Further, the first movable member 151 is provided with screw holes 185b to correspond to the screw axial portions 185a of the movable rods 153, respectively. The screw axial portion 185a is formed to be longer than the thickness of the first movable member 151 and is screwed into the respective screw hole 185b formed in the first movable member 151. The screw axial portion 185a and the screw hole 185b function as a motion conversion unit 185 which converts a rotation motion to a linear motion.

In the adjusting unit 180, when each of the spline nuts 184 rotates for a predetermined amount, the spline shaft portion 183 and the screw axial portion 185a are also rotated so that the first movable member 151 screwed with the screw axial portions 185a moves in the X-direction with respect to the first fixed member 131 to adjust the space W. The movable rods 153 are rotatably provided with respect to the second movable member 152, and as well as immobilizably connected to the second movable member 152 in the X-direction in order to integrally move the first movable member 151, the second movable member 152, and the movable rods 153 at the mold opening and closing operation.

The motion conversion unit 185 may be in various structures and may be a ball screw mechanism including a ball screw nut rotatably supported by the first movable member 151 and a ball screw shaft portion which is formed at a portion of the movable rod 153 penetrating the first movable member 151, for example. When the ball screw nut is rotated, the relative position between the ball screw shaft portion screwed into the ball screw nut and the first movable member 151 changes so that the first movable member 151 is moved.

Further, as shown in Fig. 8, the adjusting unit 180 includes a spur gear 186 with a larger diameter which engages a spur gear portion (not shown in the drawings) provided at an outer periphery of each of the sleeves 181, and a spur gear portion (not shown in the drawings) provided at an outer periphery of each of the spline nuts 184 for adjusting the space L and the space W at the same time. The spur gear 186 with the larger diameter engages both the plural sleeves 181 and the plural spline nuts 184. The adjusting unit 180 further includes a spur gear 187 with a smaller diameter which engages the spur gear 186 with the larger diameter, and an adjusting motor 188 which rotates the spur gear 187. The spur gear 186 and the spur gear 187 function as a speed reducing unit which amplifies the running torque. The adjusting motor 188 is fixed to the first fixed member 131. The adjusting motor 188 may be for example, a servomotor and includes an encoder that detects a rotation amount of the adjusting motor 188.

When the adjusting motor 188 is rotated, each of the sleeves 181 and each of the spline nuts 184 are rotated so that the second fixed member 132 and the first movable member 151 move in the X-direction with respect to the first fixed member 131. The spur gear portions of the plural sleeves 181, and the spur gear portions of the plural spline nuts 184 have the same modules (the diameter of a pitch circle / the number of gears), and the same diameter of a pitch circle so that the second fixed member 132 and the first movable member 151 can be integrally moved. Further, with the same purpose, the screw axial portion 182a of each of the plural fixed rods 133 and the screw axial portion 185a of each of the plural movable rods 153 have the same pitch and the same outside diameter.

The adjusting motor 188 is feed-back controlled by the detection result of the encoder so that the movement amounts of the second fixed member 132 and the first movable member 151 become a predetermined value. The movement amount and the moving direction of the second fixed member 132 and the first movable member 151 are determined based on a difference between the thickness of the previous mold device 113 and the thickness of the current mold device 113A.

For example, when the thickness of the mold device becomes greater by exchanging the mold device, the second fixed member 132 and the first movable member 151 are moved backward with respect to the first fixed member 131. This operation corresponds to a change from the status shown in Fig. 7 to the status shown in Fig. 12. With this operation, the space L and the space W are expanded. As the gaps δ1 and δ2 between the electromagnets 161a and 162a and the absorption units 161b and 162b become the predetermined values at the mold clamping status, respectively, appropriate driving forces which lead the appropriate mold clamping force can be obtained.

On the other hand, when the thickness of the mold device is reduced by exchanging the mold device, the second fixed member 132 and the first movable member 151 are moved forward with respect to the first fixed member 131. This operation corresponds to a change from the status shown in Fig. 12 to the status shown in Fig. 7. With this operation, the space L and the space W become small. As the gaps δ1 and δ2 between the electromagnets 161a and 162a and the absorption units 161b and 162b become the predetermined values at the mold clamping status, respectively, appropriate driving forces which lead the appropriate mold clamping force can be obtained.

Here, although in this embodiment, the plural sleeves 181 and the plural spline nuts 184 are rotated by the single adjusting motor 188, they may be rotated by plural motors. For example, plural sleeves 181 may be rotated by a single motor while the plural spline nuts 184 may be rotated by another single motor in order to separately adjust the space L and the space W. Further alternatively, plural motors may be used to correspond to the plural sleeves 181, and plural motors may be used to correspond to the plural spline nuts 184 in order to adjust the parallel relationships between the electromagnets 161a and 162a, and the absorption units 161b and 162b, respectively.

Further, in this embodiment, the plural sleeves 181 and the plural spline nuts 184 are attached to the first fixed member 131. However, positions to which the plural sleeves 181 and the plural spline nuts 184 are attached are not limited so, and they may be attached to the first movable member 151, the plural sleeves 181 may be attached to the second fixed member 132 while the plural spline nuts 184 may be attached to the second movable member 152, respectively, or the like, for example.

### (Third embodiment)

For the injection molding machine 10 of the first embodiment, the first rotation moment transmit unit 70 is formed by rods, rod insertion holes, and the like, which is supported or formed at one of and the other of the fixed-side support member 30 and the movable-side support member 50.

In this embodiment, different from the first embodiment, the first rotation moment transmit unit is provided as an end surface of one of the fixed-side support member and the movable-side support member and a contact portion which contacts the end surface at the mold clamping status and is provided in the other of the fixed-side support member and the movable-side support member.

Further, the injection molding machine of the embodiment includes a second rotation moment transmit unit in addition to the first rotation moment transmit unit.

Thus, the contact portion of the first rotation moment transmit unit is configured to contact the end surface at least at the mold clamping status, and does not necessarily contact the end surface at the mold opening status.

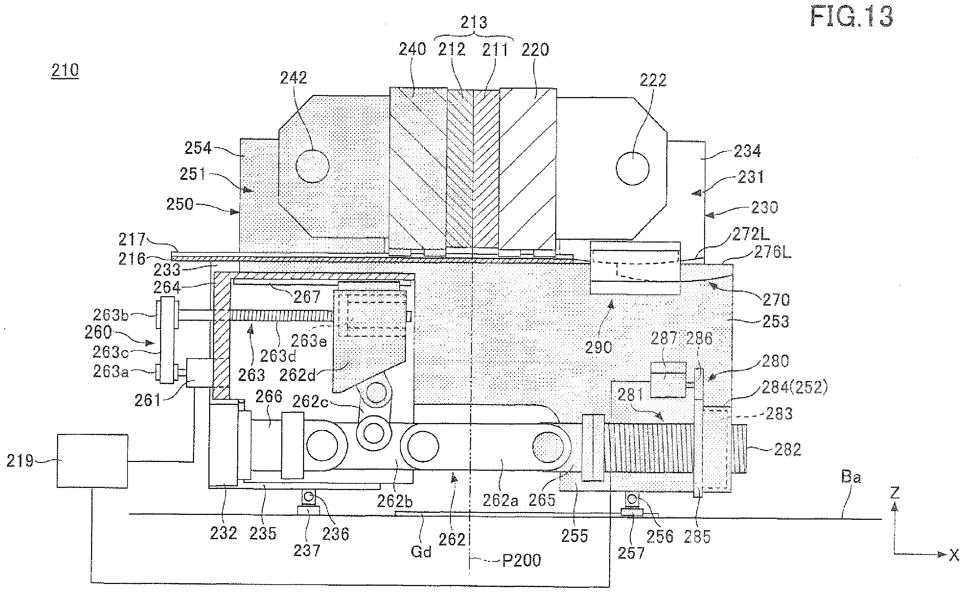

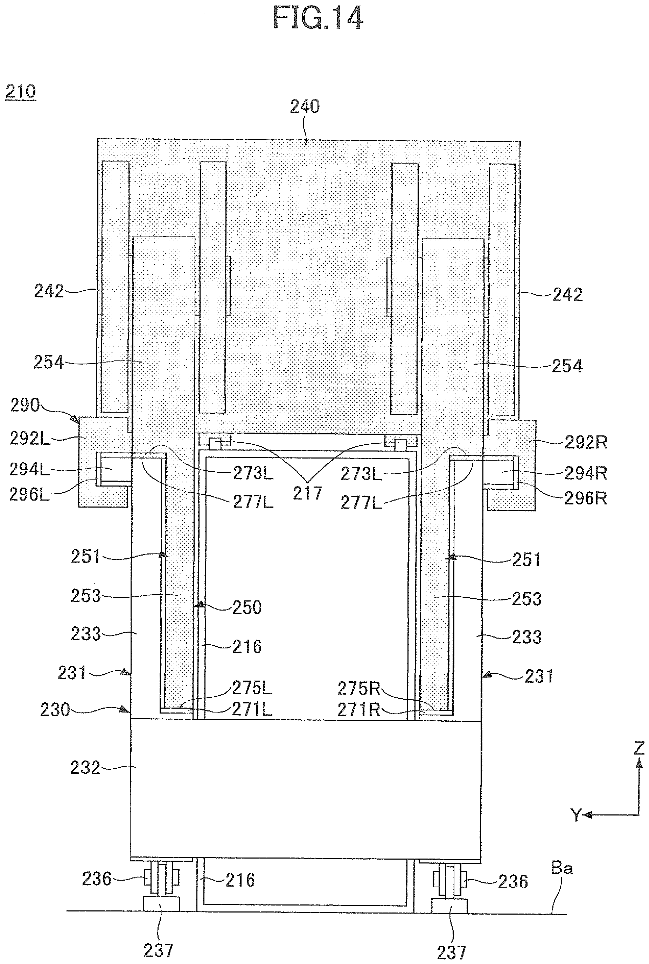

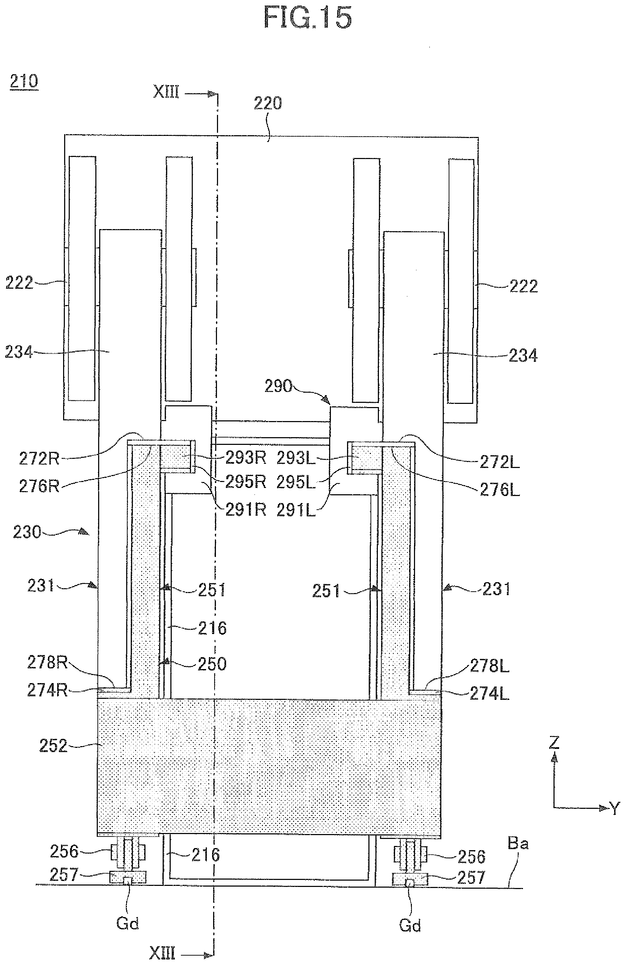

Fig. 13 is a view showing an example of an injection molding machine 210 of the third embodiment at the mold clamping status and is a cross-sectional view taken along a XIII-XIII line in Fig. 15. Fig. 14 is a back view of an example of the injection molding machine 210 of the third embodiment. Fig. 15 is a front view of an example of the injection molding machine 210 of the third embodiment. In Fig. 14 and Fig. 15, the driving unit and the adjusting unit are not shown for an explanation purpose.

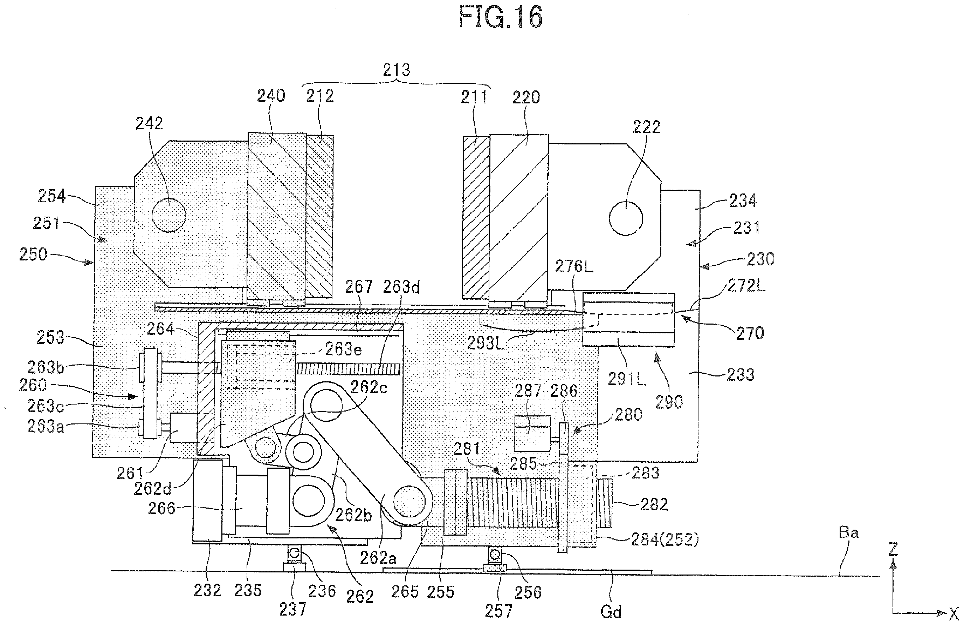

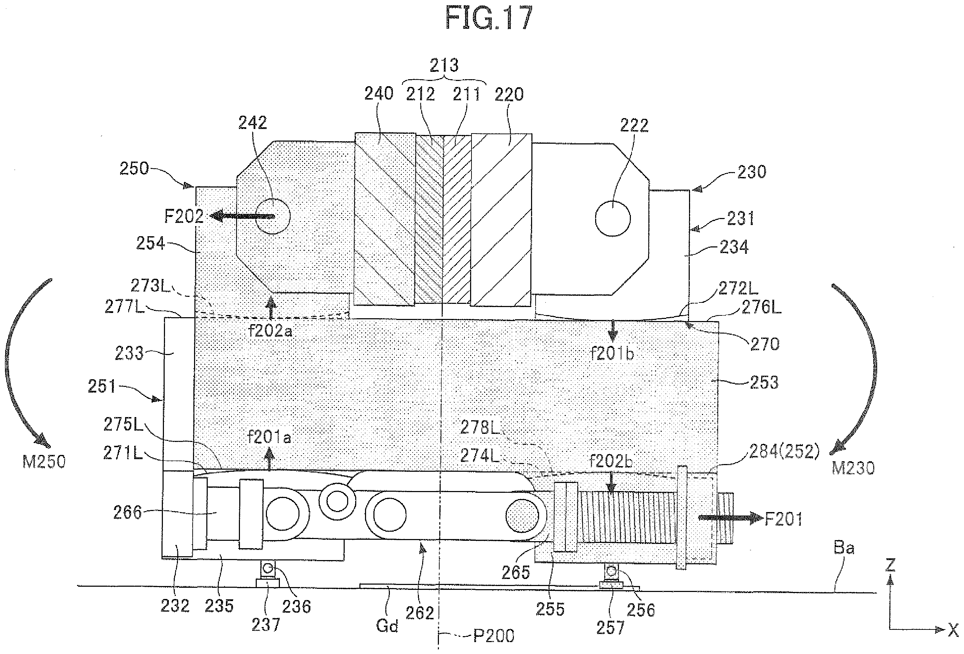

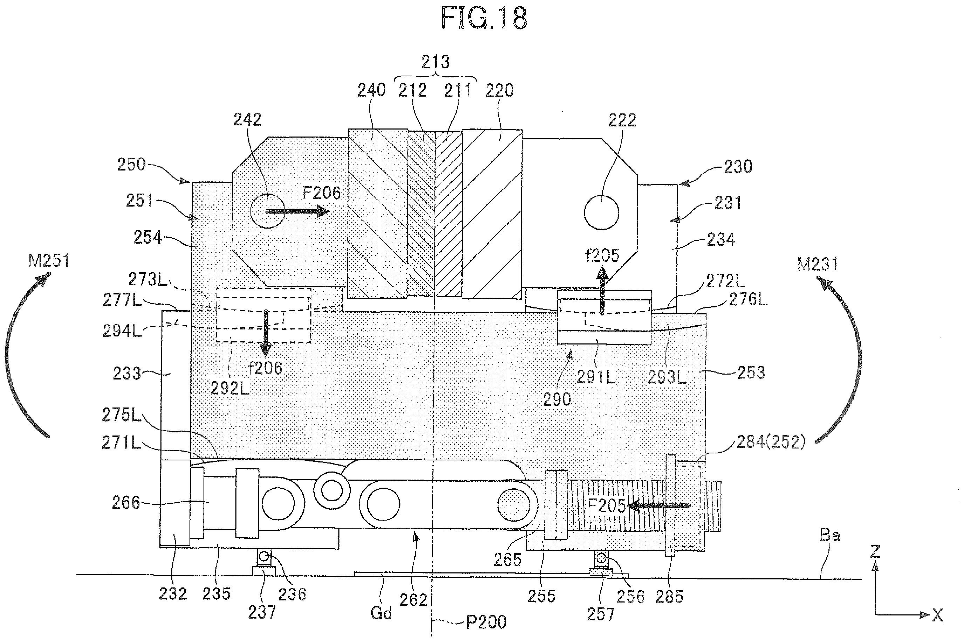

Fig. 16 is a view showing an example of the injection molding machine 210 of the third embodiment at the mold opening status. In Fig. 13 and Fig. 16, only a part of a guide table 216 is shown for an explanation purpose. Fig. 17 is a view for explaining rotation moments generated by the mold clamping operation of the injection molding machine 210 of the third embodiment. In Fig. 17, a second rotation moment transmit unit 290 is not shown for an explanation purpose. Fig. 18 is a view for explaining rotation moments generated by the mold opening operation of the injection molding machine 210 of the third embodiment.

In each of the drawings, a direction parallel to a longitudinal direction of a guide Gd mounted on a base Ba of the injection molding machine 210 is referred to as an X-direction. Further in each of the drawings, a direction parallel to a width direction of the guide Gd is referred to as a Y-direction, and a direction perpendicular to a laying surface of the guide Gd is referred to as a Z-direction. The X-direction, the Y-direction, and the Z-direction are perpendicular with each other. Further in each of the drawings, parts which linearly move in the X-direction in a mold opening and closing operation are shadowed.

The injection molding machine 210 is a tie-bar-less injection molding machine.

As shown in Fig. 13, the injection molding machine 210 includes a mold device 213 including a fixed die 211 and a movable die 212. The injection molding machine 210 further includes a fixed-side attaching member 220 to which the fixed die 211 is attached, a fixed-side support member 230 which supports the fixed-side attaching member 220, a movable-side attaching member 240 to which the movable die 212 is attached, and a movable-side support member 250 which supports the movable-side attaching member 240, for example.

When the movable-side support member 250 moves forward and backward in the X-direction, the movable die 212 moves close to and away from the fixed die 211 so that the mold closing operation, the mold clamping operation, and the mold opening operation are performed. A mold object is manufactured by the injection molding machine 210 by supplying melted resin in a cavity space (not shown in the drawings) formed between the fixed die 211 and the movable die 212 at the mold clamping status and solidifying it.

The fixed-side attaching member 220 is supported by the guide table 216. As shown in Fig. 14 and Fig. 15, the guide table 216 is fixed to the base Ba with a space from the fixed-side support member 230 and the movable-side support member 250. As the guide table 216 is not deformed when the fixed-side support member 230 and the movable-side support member 250 are deformed or oscillated by the mold clamping operation or the mold opening operation, the fixed die 211 and the movable die 212 are maintained to be in parallel relationship with each other.

The fixed-side attaching member 220 is oscillatably connected to the fixed-side support member 230 by a pin joint 222. When the fixed-side support member 230 is deformed or oscillated by the mold clamping operation or the mold opening operation, the fixed-side attaching member 220 also oscillates to maintain the position of the fixed die 211 with respect to the movable die 212.

As shown in Fig. 14 and Fig. 15, the fixed-side support member 230 includes a pair of fixed plates 231 facing each other in the Y-direction, and a connecting member 232 connecting the pair of the fixed plates 231. As being connected by the connecting member 232, the pair of fixed plates 231 moves together.

Each of the fixed plates 231 is a so-called Z-frame. Each of the fixed plates 231 includes a main body portion 233, a head portion 234 protruding upward from one end portion of the main body portion 233 (right end portion in Fig. 13), and a leg portion 235 protruding downward from the other end portion of the main body portion 233 (left end portion in Fig. 13) formed in an integrated manner. The head portion 234 and the leg portion 235 are protruding from the main body portion 233 in the opposite directions from each other.

The head portion 234 oscillatably supports the fixed-side attaching member 220. The leg portion 235 is immobilizably fixed to the base Ba so that the fixed-side support member 230 cannot move in the X-direction with respect to the base Ba. The leg portion 235 is oscillatably connected to a supporter 237, which is fixed on the base Ba, by a pin joint 236. With this structure, the fixed-side support member 230 is oscillatable with respect to the base Ba.

As shown in Fig. 13, the movable-side attaching member 240 has a substantially symmetrical shape and has a substantially symmetrical rigidity with the fixed-side attaching member 220. The movable-side attaching member 240 and the fixed-side attaching member 220 are positioned substantially symmetrical with each other having a center surface of the mold device 213 in the width direction as a standard surface P200 at the mold clamping status. The thickness of the fixed die 211 and the thickness of the movable die 212 may be the same, or may be different.

The movable-side attaching member 240 is movably mounted on a guide 217 of the guide table 216 in the X-direction in order to permit movement of the movable die 212.

The movable-side attaching member 240 is oscillatably connected to the movable-side support member 250 by a pin joint 242. When the movable-side support member 250 is deformed by the mold clamping operation or the mold opening operation, the movable-side attaching member 240 oscillates to maintain the position of the movable die 212 with respect to the fixed die 211.

As shown in Fig. 13, the movable-side support member 250 has a substantially symmetrical shape and has a substantially symmetrical rigidity with the fixed-side support member 230. The movable-side support member 250 and the fixed-side support member 230 become substantially symmetrical with each other with respect to the standard surface P200 at the mold clamping status.

As shown in Fig. 14 and Fig. 15, the movable-side support member 250 includes a pair of movable plates 251 facing each other in the Y-direction and a connecting member 252 connecting the movable plates 251. As being connected by the connecting member 252, the pair of movable plates 251 moves together. The movable plates 251 and the fixed plates 231 are provided at the same positions in the Y-direction.

Each of the movable plates 251 is a so-called Z-frame as shown in Fig. 13. Each of the movable plates 251 includes a main body portion 253, a head portion 254 protruding upward from one end portion of the main body portion 253 (left end portion in Fig. 13), and a leg portion 255 protruding from the other end portion of the main body portion 253 (right end portion in Fig. 13) formed in an integrated manner. The head portion 254 and the leg portion 255 are protruding from the main body portion 253 in the opposite directions from each other. The head portion 254 oscillatably supports the movable-side attaching member 240. The leg portion 255 is connected to a slider 257, which is movable on the guide Gd provided on the base Ba. With this structure, the movable-side support member 250 is movable with respect to the base Ba. The leg portion 255 is oscillatably connected to the slider 257 by a pin joint 256 so that the movable-side support member 250 is oscillatable with respect to the guide Gd.

Axial directions of pin joints 222, 236, 242 and 256 are in the Y-direction.

Similar to the driving unit 60 of the first embodiment, the injection molding machine 210 further includes a driving unit 260 that drives the mold clamping operation and the mold opening and closing operations. The driving unit 260 includes a mold clamping motor 261, a toggle mechanism 262 and a transmit mechanism 263. The toggle mechanism 262 amplifies a driving force of the mold clamping motor 261. The transmit mechanism 263 transmits a rotation motion of the mold clamping motor 261 to a linear motion to transmit to the toggle mechanism 262.

The mold clamping motor 261 is supported by a fixed frame 264 which is fixed to the fixed-side support member 230. The mold clamping motor 261 may be a servomotor, for example, and includes an encoder that detects a rotation amount of the mold clamping motor 261. The mold clamping motor 261 is feed-back controlled by a detection result of the encoder so that the movement amount of the movable-side support member 250 becomes a predetermined amount.

Similar to the toggle mechanism 62 of the first embodiment, the toggle mechanism 262 includes a toggle arm 262a, a first toggle lever 262b, a second toggle lever 262c, and a slider 262d.

The toggle arm 262a is oscillatably provided to the arm support member 265 which is fixed to the movable-side support member 250 via an adjusting unit 280, which will be explained later. The toggle arm 262a is oscillatably connected to the first toggle lever 262b. The first toggle lever 262b is oscillatably provided with respect to the lever support member 266 which is supported by the fixed frame 264. The second toggle lever 262c is provided at a center portion of the first toggle lever 262b to be oscillatable with respect to the first toggle lever 262b and is further oscillatably connected to the slider 262d. The slider 262d is guided in the X-direction by a guide 267 of the fixed frame 264.

The toggle mechanism 262 of the embodiment may be a double toggle although a single toggle is exemplified; the type of the toggle mechanism 262 is not specifically limited.

Similar to the transmit mechanism 63 of the first embodiment, the transmit mechanism 263 includes a drive pulley 263a which is rotated with an output shaft of the mold clamping motor 261, a driven pulley 263b which is rotatable with respect to the fixed frame 264, and a timing belt 263c which is hung around the drive pulley 263a and the driven pulley 263b. The transmit mechanism 263 further includes a ball screw shaft 263d which is rotatable in accordance with the driven pulley 263b, and a ball nut 263e which is attached to the slider 262d and is screwed with the ball screw shaft 263d. The ball screw shaft 263d and the ball nut 263e function as a motion conversion unit that converts the rotation motion to the linear motion.

The transmit mechanism 263 transmits the rotation motion of the mold clamping motor 261 to the ball screw shaft 263d by the timing belt 263c. As the mold clamping motor 261 and the ball screw shaft 263d are aligned in a lateral direction (the Z-direction) with respect to an axial direction (the X-direction) of the ball screw shaft 263d, the total length of the injection molding machine 210 (in the X-direction) becomes shorter than a case where the mold clamping motor 261 and the ball screw shaft 263d are coaxially connected.

When the mold clamping motor 261 is rotated, the ball screw shaft 263d is also rotated so that the ball nut 263e moves in the X-direction to also move the slider 262d in the X-direction. Thus, when the slider 262d moves in a forward direction in Fig. 16, the movable-side support member 250 also moves in the forward direction so that the mold closing operation is performed. Then, a mold clamping force which is a multiplication of the driving force of the mold clamping motor 261 and the toggle amplification is generated so that the mold clamping operation is performed as shown in Fig. 13. Further, when the slider 262d moves backward, the movable-side support member 250 also moves backward so that the mold opening operation is performed.

The operation of the injection molding machine 210 is explained. The operation of the injection molding machine 210 is controlled by a control unit 219 which is made of a microcomputer or the like.

First, the control unit 219 controls the mold closing operation. In the mold opening status as shown in Fig. 16, the control unit 219 controls to drive the mold clamping motor 261 to have the movable-side support member 250 move forward so that the movable die 212 contacts the fixed die 211.

Subsequently, the control unit 219 controls the mold clamping operation. The control unit 219 controls to generate the mold clamping force, which is the multiplication of the driving force of the mold clamping motor 261 and the toggle amplification, between the movable die 212 and the fixed die 211. At this time, melted resin is supplied into a cavity space (not shown in the drawings) generated between the fixed die 211 and the movable die 212, and is solidified.

Subsequently, the control unit 219 controls the mold opening operation. In the mold clamping status shown in Fig. 13, the control unit 219 controls to drive the mold clamping motor 261 to have the movable-side support member 250 move backward so that the movable die 212 moves away from the fixed die 211. When the mold opening operation is completed, a molded object is taken out from the mold device 213. As the injection molding machine 210 is tie-bar-less, the molded object can be easily taken out.

In this embodiment, similar to the first embodiment, the driving unit 260 is positioned to be shifter from the fixed die 211 and the movable die 212 in a lateral direction (the Z-direction) with respect to the mold opening and closing direction (the X-direction). Thus, compared with a conventional case, the total length of the injection molding machine 210 can be shortened so that the injection molding machine 210 can be made small and lightweight.

Similar to the first embodiment, as the driving unit 260 is positioned to be shifted from the fixed die 211 and the movable die 212 in the lateral direction (the Z-direction) with respect to the mold opening and closing direction (the X-direction), rotation moments are generated by the mold clamping operation as shown in Fig. 17.

For example, in the movable-side support member 250, a driving force F201 from the driving unit 260 parallel to the X-direction is applied to an applied point of the movable-side support member 250 connected to a nut holder 284, which will be explained later. At this time, in the movable-side support member 250, a reaction force F202 from the movable-side attaching member 240 which is parallel to the X-direction is applied to a point of action of the movable-side support member 250 connected to the movable-side attaching member 240.

As the applied point is shifted in the Z-direction from a line which is passing through the point of action and is parallel to the X-direction, a rotation moment M250 is generated in the movable-side support member 250.

Similarly, in the fixed-side support member 230, the driving force from the driving unit 260 parallel to the X-direction is applied to an applied point 232 of the fixed-side support member 230 connected to the lever support member 266. At this time, in the fixed-side support member 230, a reaction force from the fixed-side attaching member 220 which is parallel to the X-direction is applied to a point of action of the fixed-side support member 230 connected to the fixed-side attaching member 220.

As the applied point is shifted in the Z-direction from a line passing through the point of action and is parallel to the X-direction, a rotation moment M230 is generated in the fixed-side support member 230.

The center lines of the rotation moments M230 and M250, respectively, become the Y-direction. An applying direction of the rotation moment M230 (clockwise direction in Fig. 17) and an applying direction of the rotation moment M250 (counterclockwise direction in Fig. 17) are opposite from each other.

The injection molding machine 210 further includes a first rotation moment transmit unit 270 which is configured to transmit the rotation moments M230 and M250 between the fixed-side support member 230 and the movable-side support member 250 at the mold clamping operation.

For example, the first rotation moment transmit unit 270 is structured by end surfaces 275L and 276L, and 275R and 276R of the movable plates 251, respectively, and contact portions 271L and 271R, and 272L and 272R formed in the fixed plates 231, respectively, to be in contact with the end surfaces 275L and 276L, and 275R and 276R, respectively, at the mold clamping status.

As shown in Fig. 14 and Fig. 15, the contact portions 271L to 272R are formed to be left and right symmetrically to the pair of the fixed plates 231. Each of the contact portions 271L to 272R is formed by a step surface formed at the respective fixed plate 231, for example, to be in contact with the corresponding end surfaces 275L to 276R in the Z-direction of the main body portions 253 of the movable plates 251 at the mold clamping status. Although the contact portions 271L to 272R of the embodiment are formed as parts of the fixed plates 231, the contact portions 271L to 272R may be formed separately from the fixed plates 231.

The first rotation moment transmit unit 270 is further structured by end surfaces 277L and 278L, and 277R and 278R of the fixed plates 231, respectively, and contact portions 273L and 274L, and 273R and 274R formed in the movable plates 251, respectively, to be in contact with the end surfaces 277L and 278L, and 277R and 278R, respectively, at the mold clamping status.

As shown in Fig. 14 and Fig. 15, the contact portions 273L to 274R are formed to be left and right symmetrically with each other to the pair of the movable plates 251. Each of the contact portions 273L to 274R is formed by a step surface formed at the respective movable plate 251, for example, to be in contact with the corresponding end surfaces 277L to 278R in the Z-direction of the main body portions 233 of the fixed plates 231 at the mold clamping status. Although the contact portions 273L to 274R of the embodiment are formed as parts of the movable plates 251, the contact portions 273L to 274R may be formed separately from the movable plates 251.

The contact portions 271L to 272R, the end surfaces 275L to 276R, the contact portions 273L to 274R, and the end surfaces 277L to 278R convert the rotation moment M230 generated at the fixed-side support member 230, as shown in Fig. 17 for example, to forces f201a, f201b, f202a and f202b to be transmitted to the movable-side support member 250, to reduce the rotation moment M250 generated at the movable-side support member 250.

In this embodiment, as the rotation moments M230 and M250 counteract each other, a bending deformation by the rotation moments M230 and M250 can be reduced. Thus, the bending rigidity of the injection molding machine 210 (specifically, the fixed-side support member 230 and the movable-side support member 250) is reduced to be lightweight.

The contact portions 271L to 272R formed at the fixed plates 231L and the contact portions 273L to 274R formed at the movable plates 251L may be substantially symmetrical with each other with respect to the standard surface P200 at the mold clamping status. Thus, forces converted by the contact portions 271 to 274 become substantially equal so that the stress becomes even, and the deformation of the fixed-side support member 230 or the deformation of the movable-side support member 250 can be reduced.

By the contact portions 271L to 272R formed at the fixed plates 231, the end surfaces 275L to 276R of the movable plates 251, the contact portions 273L to 274R formed at the movable plates 251, and the end surfaces 277L to 278R of the fixed plates 231, the movable-side support member 250 is guided in the X-direction with respect to the fixed-side support member 230.

As shown in Fig. 14, Fig. 15 and Fig. 17, the end surfaces 275L to 276R of the movable plates 251 may be flat surfaces, and the contact portions 271L to 272R formed at the fixed plates 231 may be circular arc surfaces protruding toward the end surfaces 275L to 276R, respectively. The center lines of the circular arc surfaces are in the Y-direction, respectively. With this structure, contacting areas of the end surfaces 275L to 276R of the movable plates 251 and the contact portions 271L to 272R formed at the fixed plates 231 are kept constant when the fixed-side support member 230 is oscillated by the mold clamping operation to stabilize the transmission of the rotation moment.

Alternatively, the contact portions 271L to 272R formed at the fixed plates 231 may be flat surfaces and the end surfaces 275L to 276R formed at the movable plates 251 may be circular arc surfaces protruding toward the contact portions 271L to 272R, respectively.

Further, as shown in Fig. 14, Fig. 15 and Fig. 17, the end surfaces 277L to 278R of the fixed plates 231 may be flat surfaces, and the contact portions 273L to 274R formed at the movable plates 251 may be circular arc surfaces protruding toward the end surfaces 277L to 278R. The center lines of the circular arc surfaces are in the Y-direction, respectively. With this structure, contacting areas of the end surfaces 277L to 278R of the fixed plates 231 and the contact portions 273L to 274R formed at the movable plates 251 are kept constant when the movable-side support member 250 is oscillated by the mold clamping operation to stabilize the transmission of the rotation moment.

Alternatively, the contact portions 273L to 274R formed at the movable plates 251 may be flat surfaces and the end surfaces 277L to 278R of the fixed plates 231 may be circular arc surfaces protruding toward the contact portions 273L to 274R, respectively.

Further, as shown in Fig. 18, rotation moments are generated when starting the mold opening operation in addition to those generated at the mold clamping status. When starting the mold opening operation, the resin formed in the mold device 213 bonds the fixed die 211 and the movable die 212. Thus, a reaction force is generated against the mold opening force to generate the rotation moments by the mold opening force and the reaction force.

For example, in the movable-side support member 250, a driving force F205 which is in the opposite direction from that at the mold clamping status is applied to the applied point, and a reaction force F206 which is in the opposite direction from that at the mold clamping status is applied to the point of action. Thus, a rotation moment M251 which is in the opposite direction at the mold clamping status is generated.

Similarly, in the fixed-side support member 230, a rotation moment M231 which is in the opposite direction from that at the mold clamping status is generated. The center lines of the rotation moments M231 and M251, respectively, are in the Y-direction. An applying direction of the rotation moment M231 and an applying direction of the rotation moment M251 are opposite from each other.

The injection molding machine 210 further includes the second rotation moment transmit unit 290 which is configured to transmit the rotation moments M231 and M251 between the fixed-side support member 230 and the movable-side support member 250 at the mold opening operation.

As shown in Fig. 15 and Fig. 18, for example, the second rotation moment transmit unit 290 includes stopper portions 291L and 291R provided at the fixed plates 231 and insertion portions 293L and 293R provided at the movable plates 251, respectively. As shown in Fig. 15, the stopper portions 291L and 291R are formed to be a left and right symmetrical with each other at the pair of the fixed plates 231, respectively, and the insertion portions 293L and 293R are formed to be a left and right symmetrical with each other at the pair of the movable plates 251, respectively. Grooves 295L and 295R are respectively provided in the stopper portions 291L and 291R.

When starting the mold opening operation, the insertion portions 293L and 293R are inserted in the grooves 295L and 295R of the stopper portions 291L and 291R, respectively, and the stopper portions 291L and 291R contact end surfaces of the insertion portions 293L and 293R in the Z-direction to receive the insertion portions 293L and 293R, respectively.

Although the stopper portions 291L and 291R are formed separately from the fixed plates 231, the stopper portions 291L and 291R may be formed as parts of the fixed plates 231, respectively. Further, although the insertion portions 293L and 293R are formed separately from the movable plates 251, the insertion portions 293L and 293R may be formed as parts of the movable plates 251, respectively.

As shown in Fig. 14 and Fig. 18, for example, the second rotation moment transmit unit 290 further includes stopper portions 292L and 292R provided at the movable plates 251 and insertion portions 294L and 294R provided at the fixed plates 231, respectively. As shown in Fig. 14, the stopper portions 292L and 292R are formed to be a left and right symmetrical with each other at the pair of the movable plates 251, respectively, and the insertion portions 294L and 294R are formed to be left and right symmetrical with each other at the pair of the fixed plates 231, respectively. Grooves 296L and 296R are respectively provided in the stopper portions 292L and 292R.

When starting the mold opening operation, the insertion portions 294L and 294R are inserted in the grooves 296L and 296R of the stopper portions 292L and 292R, respectively, and the stopper portions 292L and 292R contact end surfaces of the insertion portions 294L and 294R in the Z-direction to receive the insertion portions 294L and 294R, respectively.

Although the stopper portions 292L and 292R are formed separately from the movable plates 251, the stopper portions 292L and 292R may be formed as parts of the movable plates 251. Further, although the insertion portions 294L and 294R are formed separately from the fixed plates 231, the insertion portions 294L and 294R may be formed as parts of the fixed plates 231, respectively.

As shown in Fig. 18 for example, the stopper portions 291L to 292R, and the insertion portion 293L to 294R convert the rotation moment M231 generated in the fixed-side support member 230 to forces f205 and f206 to be transmitted to the movable-side support member 250 to reduce the rotation moment M251 generated in the movable-side support member 250. Thus, the mold opening operation, which is a linear motion can be stabilized.

By the grooves 295L and 295R formed in the stopper portions 291L and 291R fixed to the fixed plates 231, and the insertion portions 293L and 293R which are inserted into the grooves 295L and 295R, respectively, the movable-side support member 250 is guided in the X-direction with respect to the fixed-side support member 230. The insertion portions 293L and 293R may not be inserted in the stopper portions 291L and 291R after the mold opening operation is finished.

Further, by the grooves 296L and 296R formed in the stopper portions 292L and 292R fixed to the movable plates 251, and the insertion portions 294L and 294R which are inserted into the grooves 296L and 296R, respectively, the movable-side support member 250 is guided in the X-direction with respect to the fixed-side support member 230. The insertion portions 294L and 294R may not be inserted in the stopper portions 292L and 292R after the mold opening operation is finished.

One side of the stopper portions 291L to 292R and the insertion portion 293L to 294R, which are contacting surfaces, may be flat surfaces while other side may be circular arc surfaces. For the circular arc surfaces, the surfaces are formed to protrude toward the flat surfaces and the center lines of the circular arc surfaces are in the Y-direction, respectively. With this structure, contacting areas of the stopper portions 291L to 292R and the insertion portion 293L to 294R can be kept constant when the fixed-side support member 230 or the movable-side support member 250 is oscillated by the mold opening operation to stabilize the transmission of the rotation moment.

The fixed-side support member 230 and the movable-side support member 250 have substantially symmetrical shapes. Thus, the magnitude of the rotation moment M230 generated at the fixed-side support member 230 by the mold clamping operation, and the magnitude of the rotation moment M250 generated at the movable-side support member 250 by the mold clamping operation become substantially the same, the rotation moments M230 and M250 become the substantially the same to counteract each other. Further, as the magnitude of the rotation moment M231 generated at the fixed-side support member 230 by the mold opening operation and the magnitude of the rotation moment M251 generated at the movable-side support member 250 by the mold opening operation become substantially the same, the rotation moments M231 and M251 become the substantially the same to counteract each other.

The movable-side support member 250 is oscillatable with respect to the guide Gd. When the movable-side support member 250 is deformed by the mold clamping operation or the mold opening operation, the movable-side support member 250 oscillates to reduce the transmission of the stress from the movable-side support member 250 to the guide Gd to reduce the deformation of the guide Gd.

Further, the fixed-side support member 230 is oscillatable with respect to the base Ba. Thus, when the fixed-side support member 230 is deformed by the mold clamping operation or the mold opening operation, the fixed-side support member 230 oscillates by an amount similar to that of the movable-side support member 250 so that the behavior of the fixed-side support member 230 and the behavior of the movable-side support member 250 become substantially symmetrical with respect to the standard surface P200. Thus, the rotation moments M230, M250, M231 and M251 can be effectively reduced.

As the injection molding machine 210 of the embodiment is tie-bar-less, it is easy to exchange the mold device 213. When the mold device 213 is exchanged, the thickness of the mold device 213 (the total thickness of the fixed die 211 and the movable die 212) may change. The thickness of the mold device 213 may change due to a temperature change of the mold device 213.

The injection molding machine 210 further includes an adjusting unit 280 that adjusts the relative position of the fixed-side support member 230 and the movable-side support member 250 at the mold clamping status in order to obtain an appropriate mold clamping force in accordance with the thickness of the mold device 213. The adjustment by the adjusting unit 280 may be performed at any status of the mold closing, the mold clamping, and the mold opening status.

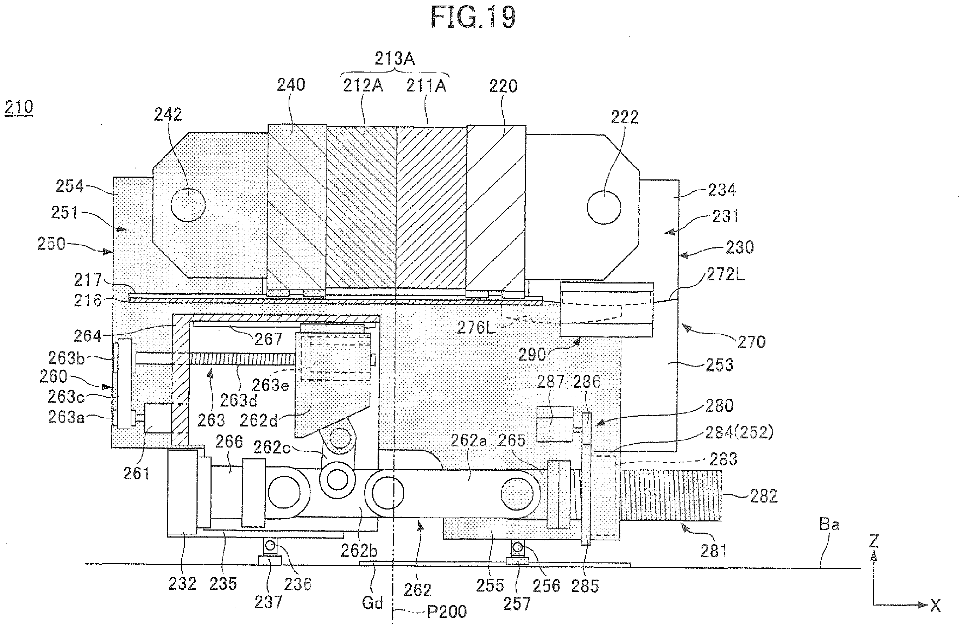

Fig. 19 is a view for explaining an operation of the adjusting unit of the injection molding machine 210 of the third embodiment. Fig. 19 is a view showing an example of the injection molding machine 210 of the embodiment at the mold clamping status where the mold device 213 shown in Fig. 13 is exchanged for a new mold device 213A, and the adjustment by the adjusting unit 280 in accordance with the thickness of the new mold device 213A is performed.

The adjusting unit 280 has the same structure as the adjusting unit 80 of the first embodiment. The adjusting unit 280 includes an adjusting rod 281 which is connected to the arm support member 265, an adjusting nut 283 which receives a screw portion 282 formed at an outer periphery surface of the adjusting rod 281, and a nut holder 284 which rotatably supports the adjusting nut 283. The screw portion 282 formed at the adjusting rod 281 in cooperation with the adjusting nut 283 functions as the motion conversion unit that converts the rotation motion to the linear motion.

The nut holder 284 is formed at the connecting member 252 of the movable-side support member 250, and immobilizably supports the adjusting nut 283 in the X-direction with respect to the movable-side support member 250. The adjusting unit 280 further includes a spur gear 285 with a larger diameter which is rotatable with the adjusting nut 283, a spur gear 286 with a smaller diameter which engages the spur gear 285, and an adjusting motor 287 which rotates the spur gear 286. The spur gear 285 and the spur gear 286 function as the speed reducing unit that amplifies a running torque. The adjusting motor 287 is fixed to the movable-side support member 250. The adjusting motor 287 includes an encoder such as a servomotor, for example, that detects a rotation amount of the adjusting motor 287.

When the adjusting motor 287 is rotated, the adjusting nut 283 moves in the X-direction with respect to the adjusting rod 281 while being rotated so that the movable-side support member 250 is also moved in the X-direction with respect to the fixed-side support member 230. The adjusting motor 287 is feed-back controlled by a detection result of the encoder so that the rotation amount of the adjusting nut 283 becomes a predetermined amount. The movement amount and the moving direction of the adjusting rod 281 are determined based on a difference between the thickness of the previous mold device 213 and the thickness of the current mold device 213A. Then, an angle formed by the toggle arm 262a and the first toggle lever 262b becomes a predetermined value (for example, about 180°) at the mold clamping status so that an appropriate mold clamping force can be obtained.

The adjusting motor 287 and the mold clamping motor 261 are respectively provided to one of and the other of the fixed-side support member 230 and the movable-side support member 250, and the fixed-side support member 230 and the movable-side support member 250 can be formed to have symmetrical shapes and the size can be reduced.

According to the embodiments, a small and lightweight injection molding machine can be provided.

The individual constituents of the control unit 19, the control unit 119, and the control unit 219 may be embodied by arbitrary combinations of hardware and software, typified by a CPU of an arbitrary computer, memory, a program loaded in the memory so as to embody the constituents illustrated in the drawings, storage units for storing the program such as a hard disk, and an interface for network connection. It may be understood by those skilled in the art that methods and devices for the embodiment allow various modifications.

## Claims

1. An injection molding machine (10, 110, 210) comprising:
a fixed-side support member (30, 130, 230) which supports a fixed-side attaching member (20, 120, 220) to which a fixed die (11, 111, 211) is to be attached;
a movable-side support member (50, 150, 250) which supports a movable-side attaching member (40, 140, 240) to which a movable die (12, 112, 212) is to be attached;
a driving unit (60, 160, 260) which drives the movable-side support member (50, 150, 250) for a mold clamping operation; and
a rotation moment transmit unit (70, 170, 270),
wherein the fixed-side support member (30, 130, 230) is configured such that a first point to which a force parallel to a mold opening and closing direction from the driving unit (60, 160, 260) is applied at the mold clamping operation is shifted in a lateral direction which is perpendicular to the mold opening and closing direction from a first line passing through a second point to which a reaction force parallel to the mold opening and closing direction from the fixed-side attaching member is applied at the mold clamping operation and is in parallel relationship with the mold opening and closing direction, and
the movable-side support member (50, 150, 250) is configured such that a third point to which a force parallel to the mold opening and closing direction from the driving unit (60, 160, 260) is applied at the mold clamping operation is shifted in the lateral direction from a second line passing through a fourth point to which a reaction force parallel to the mold opening and closing direction from the movable-side attaching member is applied at the mold clamping operation and is in parallel relationship with the mold opening and closing direction,
the fixed-side support member and the movable-side support member are configured such that a first rotation moment and a second rotation moment, whose applying direction is opposite from an applying direction of the first rotation moment, are generated by the mold clamping operation, respectively, **characterized in that**
the rotation moment transmit unit includes
a fixed rod (71, 133) supported by the fixed-side support member,
a fixed rod insertion hole (73, 158) provided at the movable-side support member in which the fixed rod is to be inserted,
a movable rod (72, 153) supported by the movable-side support member, and
a movable rod insertion hole (74, 159) provided at the fixed-side support member in which the movable rod is to be inserted,
or
a first end surface (275L, 276L, 275R, 276R) of the fixed-side support member,
a first contact portion (271L 271R, 272L, 272R) provided in the movable-side support member to be in contact with the first end surface at the mold clamping operation,
a second end surface (277L, 278L, 277R, 278R) of the movable-side support member, and
a second contact portion (273L, 274L, 273R, 274R) provided in the fixed-side support member to be in contact with the second end surface at the mold clamping operation,
such that the rotation moment transmit unit transmits the first rotation moment and the second rotation moment between the fixed-side support member and the movable-side support member.

2. The injection molding machine according to claim 1,
wherein the driving unit is positioned to be shifted from the fixed die and the movable die in the lateral direction.

3. The injection molding machine, according to claim 1 or 2,
wherein the fixed rod (71, 133) and the fixed rod insertion hole (73, 158), and/or the movable rod (72, 153) and the movable rod insertion hole (74, 159) are configured such that the movable-side support member is guided in the mold opening and closing direction with respect to the fixed-side support member.

4. The injection molding machine according to claim 1 or 3,
wherein the fixed rod (71, 133) and the fixed rod insertion hole (73, 158), and the movable rod (72, 153) and the movable rod insertion hole (74, 159) are configured to transmit the first rotation moment and the second rotation moment between the fixed-side support member and the movable-side support member, respectively.

5. The injection molding machine according to claim 1,
wherein the first end surface (275L, 276L, 275R, 276R) and the first contact portion (271L 271R, 272L, 272R), and/or the second end surface (277L, 278L, 277R, 278R) and the second contact portion (273L, 274L, 273R, 274R) are configured such that the movable-side support member is guided in the mold opening and closing direction with respect to the fixed-side support member.

6. The injection molding machine according to any one of claims 1-5,
wherein the fixed-side support member, and the movable-side support member are configured such that a third rotation moment and a fourth rotation moment, whose applying direction is opposite from an applying direction of the third rotation moment, are generated by a mold opening operation, respectively, and
the rotation moment transmit unit is configured to transmit the third rotation moment and the fourth rotation moment between the fixed-side support member and the movable-side support member.

7. The injection molding machine according to any one of claims 1-6,
wherein the fixed-side support member (30, 130, 230} and the movable-side support member (50, 150, 250) are configured to have substantially symmetrical shapes, and
the rotation moment transmit unit (70, 170, 270) counteracts the first rotation moment and the second rotation moment by transmitting the first rotation moment and the second rotation moment between the fixed-side support member and the movable-side support member.

8. The injection molding machine according to any one of claims 1-7, further comprising:
a base, and
wherein the fixed-side support member is oscillatably provided with respect to the base, and
the movable-side support member is oscillatably provided with respect to the base and movably provided with respect to the base in the mold opening and closing direction.

9. The injection molding machine according to any one of claims 1-8, further comprising:
an adjusting unit which adjusts a relative position between the fixed-side support member and the movable-side support member.

10. The injection molding machine (10, 110, 210) according to any one of claims 1 to 2,
wherein the fixed-side support member (30, 130, 230) and the movable-side support member (50, 150, 250) are configured to have substantially symmetrical shapes,
the fixed-side support member (30, 130, 230) and the movable-side support member (50, 150, 250) are configured to respectively include
a fixed-side support portion (34, 131, 234) and a movable-side support portion (54, 151, 254) which are positioned to be aligned with the fixed die and the movable die for supporting the fixed-side attaching member and the movable-side attaching member, respectively, such that the fixed-side attaching member (20, 120, 220) and movable-side attaching member (40, 140, 240) are positioned between the fixed-side support portion (34, 131, 234) and the movable-side support portion (54, 151, 254), and
a fixed-side extending portion (33, 133, 233) and a movable-side extending portion (53, 153, 253) provided to extend in the mold opening and closing direction at a position shifted from the fixed die and the movable die in the lateral direction,
the fixed-side support portion (34, 131, 234) and the movable-side support portion (54, 151) connected to the fixed-side extending portion (33, 133, 233) and the movable-side extending portion (53, 153, 253), respectively,
the fixed-side extending portion (33, 133, 233) being provided to extend in the mold opening and closing direction at least from a connecting portion with the fixed-side support portion (34, 131, 234) to a side of the movable-side support portion (54, 151, 254) to be in contact with the movable-side support portion (54, 151, 254) in the lateral direction, and
the movable-side extending portion (53, 153, 253) being provided to extend in the mold opening and closing direction at least from a connecting portion with the movable-side support portion (54, 151, 254) to a side of the fixed-side support portion (34, 131, 234) to be in contact with the fixed-side support portion (34, 131, 234) in the lateral direction.

## Patentansprüche

1. Spritzgießmaschine (10, 110, 210), umfassend:
ein feststehend-seitiges Abstützteil (30, 130, 230), das ein feststehend-seitiges Befestigungsteil (20, 120, 220), an das ein feststehender Stempel (11, 111, 211) zu befestigen ist, abstützt;
ein beweglich-seitiges Abstützteil (50, 150, 250), das ein beweglich-seitiges Befestigungsteil (40, 140, 240), an das ein beweglicher Stempel (12, 112, 212) zu befestigen ist, abstützt;
eine Antriebseinheit (60, 160, 260), die das beweglich-seitige Abstützteil (50, 150, 250) für einen Formklemmvorgang antreibt; und
eine Drehmomentübertragungseinheit (70, 170, 270),
wobei das feststehend-seitige Abstützteil (30, 130, 230) so konfiguriert ist, dass ein erster Punkt, an dem bei dem Formklemmvorgang eine Kraft, die parallel zu einer Formöffnung und -Schließrichtung ab der Antriebseinheit (60, 160, 260) ist, beaufschlagt wird, in eine laterale Richtung verschoben wird, die rechtwinklig ist zu der Formöffnung und -Schließrichtung ab einer ersten Linie, die durch einen zweiten Punkt verläuft, an dem bei dem Formklemmvorgang eine Reaktionskraft beaufschlagt wird, die parallel zu der Formöffnung und -Schließrichtung ab dem feststehend-seitigen Befestigungsteil ist und in einem parallelen Verhältnis zu der Formöffnung und -Schließrichtung steht, und
das beweglich-seitige Abstützteil (50, 150, 250) so konfiguriert ist, dass ein dritter Punkt, an dem bei dem Formklemmvorgang eine Kraft, die parallel zu der Formöffnung und -Schließrichtung ab der Antriebseinheit (60, 160, 260) ist, beaufschlagt wird, in die laterale Richtung verschoben wird ab einer zweiten Linie, die durch einen vierten Punkt verläuft, an dem bei dem Formklemmvorgang eine Reaktionskraft beaufschlagt wird, die parallel zu der Formenöffnung und -Schließrichtung ab dem beweglich-seitigen Befestigungsteil ist, und in einem parallelen Verhältnis zu der Formöffnung und - Schließrichtung steht,
das feststehend-seitige Abstützteil und das beweglich-seitige Abstützteil so konfiguriert sind, dass ein erstes Drehmoment und ein zweites Drehmoment, dessen Beaufschlagungsrichtung entgegengesetzt ist zu einer Beaufschlagungsrichtung des ersten Drehmoments, durch den Formklemmvorgang entsprechend erzeugt werden, **dadurch gekennzeichnet, dass**
die Drehmomentübertragungseinheit Folgendes einschließt
einen feststehenden Stab (71, 133), der durch das feststehend-seitige Abstützteil abgestützt ist,
ein Einführloch (73, 158) des feststehenden Stabs, das an dem beweglich-seitigen Abstützteil, in das der feststehende Stab einzuführen ist, vorgesehen ist,
einen beweglichen Stab (72, 153), der durch das beweglich-seitige Abstützteil abgestützt ist, und
ein Einführloch (74, 159) des beweglichen Stabs, das an dem feststehend-seitigen Abstützteil, in das der bewegliche Stab einzuführen ist, vorgesehen ist,
oder
eine erste Endfläche (275L, 276L, 275R, 276R) des feststehend-seitigen Abstützteils,
einen ersten Kontaktbereich (271L, 271R, 272L, 272R), der in dem beweglichseitigen Abstützteil vorgesehen ist, um bei dem Formklemmvorgang in Kontakt mit der ersten Endfläche zu sein,
eine zweite Endfläche (277L, 278L, 277R, 278R) des beweglich-seitigen Abstützteils, und
einen zweiten Kontaktbereich (273L, 274L, 273R, 274R), der in dem feststehendseitigen Abstützteil vorgesehen ist, um bei dem Formklemmvorgang in Kontakt mit der zweiten Endfläche zu sein,
so dass die Drehmomentübertragungseinheit das erste Drehmoment und das zweite Drehmoment zwischen dem feststehend-seitigen Abstützteil und dem beweglichseitigen Abstützteil überträgt.

2. Spritzgießmaschine nach Anspruch 1, wobei die Antriebseinheit positioniert ist, um ab dem feststehenden Stempel und dem beweglichen Stempel in die laterale Richtung verschoben zu werden.

3. Spritzgießmaschine nach Anspruch 1 oder 2,
wobei der feststehende Stab (71, 133) und das Einführloch (73, 158) des feststehenden Stabs und/oder der bewegliche Stab (72, 153) und das Einführloch (74, 159) des beweglichen Stabs so konfiguriert sind, dass das beweglich-seitige Abstützteil in der Formöffnung und -Schließrichtung in Bezug auf das feststehend-seitige Abstützteil geführt ist.

4. Spritzgießmaschine nach Anspruch 1 oder 3,
wobei der feststehende Stab (71, 133) und das Einführloch (73, 158) des feststehenden Stabs, und der bewegliche Stab (72, 153) und das Einführloch (74, 159) des beweglichen Stabs konfiguriert sind, das erste Drehmoment und das zweite Drehmoment zwischen dem feststehend-seitigen Abstützteil und dem beweglich-seitigen Abstützteil entsprechend zu übertragen.

5. Spritzgießmaschine nach Anspruch 1,
wobei die erste Endfläche (275L, 276L, 275R, 276R) und der erste Kontaktbereich (271L, 271R, 272L, 272R), und/oder die zweite Endfläche (277L, 278L, 277R, 278R) und der zweite Kontaktbereich (273L, 274L, 273R, 274R) so konfiguriert sind, dass das beweglich-seitige Abstützteil in der Formöffnung und -Schließrichtung in Bezug auf das feststehend-seitige Abstützteil geführt ist.

6. Spritzgießmaschine nach einem der Ansprüche 1 bis 5,
wobei das feststehend-seitige Abstützteil und das beweglich-seitige Abstützteil so konfiguriert sind, dass ein drittes Drehmoment und ein viertes Drehmoment, dessen Beaufschlagungsrichtung entgegengesetzt ist zu einer Beaufschlagungsrichtung des dritten Drehmoments, entsprechend durch einen Formöffnungsvorgang erzeugt werden, und
die Drehmomentübertragungseinheit konfiguriert ist, das dritte Drehmoment und das vierte Drehmoment zwischen dem feststehend-seitigen Abstützteil und dem beweglich-seitigen Abstützteil zu übertragen.

7. Spritzgießmaschine nach einem der Ansprüche 1 bis 6,
wobei das feststehend-seitige Abstützteil (30, 130, 230) und das beweglich-seitige Abstützteil (50, 150, 250) konfiguriert sind, im Wesentlichen symmetrische Formen zu haben, und
die Drehmomentübertragungseinheit (70, 170, 270) dem ersten Drehmoment und dem zweiten Drehmoment durch Übertragen des ersten Drehmoments und des zweiten Drehmoments zwischen dem feststehend-seitigen Abstützteil und dem beweglich-seitigen Abstützteil entgegenwirkt.

8. Spritzgießmaschine nach einem der Ansprüche 1 bis 7, ferner umfassend:
einen Sockel, und
wobei das feststehend-seitige Abstützteil in Bezug auf den Sockel oszillierbar vorgesehen ist, und
das beweglich-seitige Abstützteil in Bezug auf den Sockel oszillierbar vorgesehen ist und in Bezug auf den Sockel in der Formöffnung und -Schließrichtung beweglich vorgesehen ist.

9. Spritzgießmaschine nach einem der Ansprüche 1 bis 8, ferner umfassend:
eine Einstelleinheit, die eine relative Position zwischen dem feststehend-seitigen Abstützteil und dem beweglich-seitigen Abstützteil einstellt.

10. Spritzgießmaschine (10, 110, 210) nach einem der Ansprüche 1 bis 2,
wobei das feststehend-seitige Abstützteil (30, 130, 230) und das beweglich-seitige Abstützteil (50, 150, 250) konfiguriert sind, im Wesentlichen symmetrische Formen zu haben,
das feststehend-seitige Abstützteil (30, 130, 230) und das beweglich-seitige Abstützteil (50, 150, 250) konfiguriert sind, entsprechend Folgendes einzuschließen
einen feststehend-seitigen Abstützbereich (34, 131, 234) und einen beweglich-seitigen Abstützbereich (54, 151, 254), die positioniert sind, mit dem feststehenden Stempel und dem beweglichen Stempel zum Abstützen des feststehend-seitigen Befestigungsteils und entsprechend des bewegich-seitigen Befestigungsteils ausgerichtet zu sein, so dass das feststehend-seitige Befestigungsteil (20, 120, 220) und das beweglich-seitige Befestigungsteil (40, 140, 240) zwischen dem feststehend-seitigen Abstützbereich (34, 131, 234) und dem beweglich-seitigen Abstützbereich (54, 151, 254) positioniert sind, und
einen feststehend-seitigen Erstreckungsbereich (33, 133, 233) und einen beweglich-seitigen Erstreckungsbereich (53, 153, 253), die vorgesehen sind, um sich in die Formöffnung und -Schließrichtung in einer Position, die ab dem feststehenden Stempel und dem beweglichen Stempel in der lateralen Richtung verschoben ist, zu erstrecken,
den feststehend-seitigen Abstützbereich (34, 131, 234) und den beweglich-seitigen Abstützbereich (54, 151), die mit dem feststehend-seitigen Erstreckungsbereich (33, 133, 233) und dem beweglich-seitigen Erstreckungsbereich (53, 153, 253) entsprechend verbunden sind,
den feststehend-seitigen Erstreckungsbereich (33, 133, 233), der vorgesehen ist, sich in die Formöffnung und -Schließrichtung zumindest ab einem Verbindungsbereich mit dem feststehend-seitigen Abstützbereich (34, 131, 234) zu einer Seite des beweglich-seitigen Abstützbereichs (54, 151, 254) zu erstrecken, um in Kontakt mit dem beweglich-seitigen Abstützbereich (54, 151, 254) in der lateralen Richtung zu stehen, und
den beweglich-seitigen Erstreckungsbereich (53, 153, 253), der vorgesehen ist, sich in der Formöffnung und -Schließrichtung zumindest ab einem Verbindungsbereich mit dem beweglich-seitigen Abstützbereich (54, 151, 254) zu einer Seite des feststehend-seitigen Abstützbereichs (34, 131, 234) zu erstrecken, um in Kontakt mit dem feststehend-seitigen Abstützbereich (34, 131, 234) in der lateralen Richtung zu stehen.

## Revendications

1. Machine de moulage par injection (10, 110, 210) comprenant :
un élément de support côté fixe (30, 130, 230) qui supporte un élément de fixation côté fixe (20, 120, 220) auquel doit être fixée une matrice fixe (11, 111, 211) ;
un élément de support côté mobile (50, 150, 250) qui supporte un élément de fixation côté mobile (40, 140, 240) auquel doit être fixée une matrice mobile (12, 112, 212);
une unité d'entraînement (60, 160, 260) qui entraîne l'élément de support côté mobile (50, 150, 250) pour une opération de serrage de moule; et
une unité de transmission de moment de rotation (70, 170, 270),
dans laquelle l'élément de support côté fixe (30, 130, 230) est configuré de telle sorte qu'un premier point auquel une force parallèle à une direction d'ouverture et de fermeture de moule depuis l'unité d'entraînement (60, 160, 260) est appliquée lors de l'opération de serrage de moule est décalé dans une direction latérale qui est perpendiculaire à la direction d'ouverture et de fermeture de moule depuis une première ligne passant par un deuxième point auquel une force de réaction parallèle à la direction d'ouverture et de fermeture de moule depuis l'élément de fixation côté fixe est appliquée lors de l'opération de serrage de moule et se trouve dans une relation parallèle à la direction d'ouverture et de fermeture de moule, et
l'élément de support côté mobile (50, 150, 250) est configuré de telle sorte qu'un troisième point auquel une force parallèle à la direction d'ouverture et de fermeture de moule depuis l'unité d'entraînement (60, 160, 260) est appliquée lors de l'opération de serrage de moule est décalé dans la direction latérale depuis une deuxième ligne passant par un quatrième point auquel une force de réaction parallèle à la direction d'ouverture et de fermeture de moule depuis l'élément de fixation côté mobile est appliquée lors de l'opération de serrage de moule et se trouve dans une relation parallèle à la direction d'ouverture et de fermeture de moule,
l'élément de support côté fixe et l'élément de support côté mobile sont configurés de telle sorte qu'un premier moment de rotation et un deuxième moment de rotation, dont la direction d'application est opposée à une direction d'application du premier moment de rotation, sont générés par l'opération de serrage de moule, respectivement, **caractérisée en ce que**
l'unité de transmission de moment de rotation inclut
une broche fixe (71, 133) supportée par l'élément de support côté fixe,
un trou d'insertion de broche fixe (73, 158) situé au niveau de l'élément de support côté mobile, dans lequel la broche fixe doit être insérée,
une broche mobile (72, 153) supportée par l'élément de support côté mobile, et
un trou d'insertion de broche mobile (74, 159) situé au niveau de l'élément de support côté fixe, dans lequel la broche mobile doit être insérée,
ou
une première surface d'extrémité (275L, 276L, 275R, 276R) de l'élément de support côté fixe,
une première partie de contact (271L, 271R, 272L, 272R) située dans l'élément de support côté mobile pour être en contact avec la première surface d'extrémité lors de l'opération de serrage de moule,
une deuxième surface d'extrémité (277L, 278L, 277R, 278R) de l'élément de support côté mobile, et
une deuxième partie de contact (273L, 274L, 273R, 274R) située dans l'élément de support côté fixe pour être en contact avec la deuxième surface d'extrémité lors de l'opération de serrage de moule,
de telle sorte que l'unité de transmission de moment de rotation transmet le premier moment de rotation et le deuxième moment de rotation entre l'élément de support côté fixe et l'élément de support côté mobile.

2. Machine de moulage par injection selon la revendication 1, dans laquelle l'unité d'entraînement est positionnée pour être décalée de la matrice fixe et de la matrice mobile dans la direction latérale.

3. Machine de moulage par injection, selon la revendication 1 ou 2,
dans laquelle la broche fixe (71, 133) et le trou d'insertion de broche fixe (73, 158), et/ou la broche mobile (72, 153) et le trou d'insertion de broche mobile (74, 159) sont configurés de telle sorte que l'élément de support côté mobile est guidé dans la direction d'ouverture et de fermeture de moule par rapport à l'élément de support côté fixe.

4. Machine de moulage par injection selon la revendication 1 ou 3,
dans laquelle la broche fixe (71, 133) et le trou d'insertion de broche fixe (73, 158), et la broche mobile (72, 153) et le trou d'insertion de broche mobile (74, 159) sont configurés pour transmettre le premier moment de rotation et le deuxième moment de rotation entre l'élément de support côté fixe et l'élément de support côté mobile, respectivement.

5. Machine de moulage par injection selon la revendication 1,
dans laquelle la première surface d'extrémité (275L, 276L, 275R, 276R) et la première partie de contact (271L, 271R, 272L, 272R), et/ou la deuxième surface d'extrémité (277L, 278L, 277R, 278R) et la deuxième partie de contact (273L, 274L, 273R, 274R) sont configurées de telle sorte que l'élément de support côté mobile est guidé dans la direction d'ouverture et de fermeture de moule par rapport à l'élément de support côté fixe.

6. Machine de moulage par injection selon l'une quelconque des revendications 1 à 5,
dans laquelle l'élément de support côté fixe, et l'élément de support côté mobile sont configurés de telle sorte qu'un troisième moment de rotation et un quatrième moment de rotation, dont la direction d'application est opposée à une direction d'application du troisième moment de rotation, sont générés par une opération d'ouverture de moule, respectivement, et
l'unité de transmission de moment de rotation est configurée pour transmettre le troisième moment de rotation et le quatrième moment de rotation entre l'élément de support côté fixe et l'élément de support côté mobile.

7. Machine de moulage par injection selon l'une quelconque des revendications 1 à 6,
dans laquelle l'élément de support côté fixe (30, 130, 230) et l'élément de support côté mobile (50, 150, 250) sont configurés pour avoir des formes sensiblement symétriques, et
l'unité de transmission de moment de rotation (70, 170, 270) contre le premier moment de rotation et le deuxième moment de rotation en transmettant le premier moment de rotation et le deuxième moment de rotation entre l'élément de support côté fixe et l'élément de support côté mobile.

8. Machine de moulage par injection selon l'une quelconque des revendications 1 à 7, comprenant en outre :
une base, et
dans laquelle l'élément de support côté fixe est disposé de manière à pouvoir osciller par rapport à la base, et
l'élément de support côté mobile est disposé de manière à pouvoir osciller par rapport à la base et disposé de manière à pouvoir se déplacer par rapport à la base dans la direction d'ouverture et de fermeture de moule.

9. Machine de moulage par injection selon l'une quelconque des revendications 1 à 8, comprenant en outre :
une unité d'ajustement qui ajuste une position relative entre l'élément de support côté fixe et l'élément de support côté mobile.

10. Machine de moulage par injection (10, 110, 210) selon l'une quelconque des revendications 1 à 2,
dans laquelle l'élément de support côté fixe (30, 130, 230) et l'élément de support côté mobile (50, 150, 250) sont configurés pour avoir des formes sensiblement symétriques,
l'élément de support côté fixe (30, 130, 230) et l'élément de support côté mobile (50, 150, 250) sont configurés pour inclure respectivement
une portion de support côté fixe (34, 131, 234) et une portion de support côté mobile (54, 151, 254) qui sont positionnées pour être alignées sur la matrice fixe et sur la matrice mobile pour supporter l'élément de fixation côté fixe et l'élément de fixation côté mobile, respectivement, de telle sorte que l'élément de fixation côté fixe (20, 120, 220) et l'élément de fixation côté mobile (40, 140, 240) sont positionnés entre la portion de support côté fixe (34, 131, 234) et la portion de support côté mobile (54, 151, 254), et
une portion d'extension côté fixe (33, 133, 233) et une portion d'extension côté mobile (53, 153, 253) disposées pour s'étendre dans la direction d'ouverture et de fermeture de moule dans une position décalée de la matrice fixe et de la matrice mobile dans la direction latérale,
la portion de support côté fixe (34, 131, 234) et la portion de support côté mobile (54, 151) connectées respectivement à la portion d'extension côté fixe (33, 133, 233) et à la portion d'extension côté mobile (53, 153, 253),
la portion d'extension côté fixe (33, 133, 233) étant disposée pour s'étendre dans la direction d'ouverture et de fermeture de moule au moins depuis une portion de connexion avec la portion de support côté fixe (34, 131, 234) jusqu'à un côté de la portion de support côté mobile (54, 151, 254) pour être en contact avec la portion de support côté mobile (54, 151, 254) dans la direction latérale, et
la portion d'extension côté mobile (53, 133, 253) étant disposée pour s'étendre dans la direction d'ouverture et de fermeture de moule au moins depuis une portion de connexion avec la portion de support côté mobile (54, 151, 254) jusqu'à un côté de la portion de support côté fixe (34, 131, 234) pour être en contact avec la portion de support côté fixe (34, 131, 234) dans la direction latérale.
